# EUROPEAN PATENT SPECIFICATION

(11) **EP 1 452 106 B1**
(45) Date of publication and mention of the grant of the patent: **21.12.2011**
(21) Application number: 02745864.5
(22) Date of filing: 05.07.2002
(51) Int. Cl.: A44B 19/42

(54) **FASTENER STRIP WITH MAGNETIC BODY**
BEFESTIGUNGSSTREIFEN MIT MAGNETISCHEM KÖRPER
BANDE DE FIXATION COMPORTANT UN CORPS MAGNETIQUE

(30) Priority: 05.10.2001 US 971512; 05.10.2001 US 972353
(43) Date of publication of application: 01.09.2004
(73) Proprietor: YKK Corporation, Chiyoda-ku, Tokyo 101 8642 (JP)
(72) Inventor: FUJISAWA, Nobuo, Macon, GA 31210 (US); GRAHAM, Craig, Jay, Eastman, GA 31023 (US); MINATO, Tsuyoshi, Nakaniikawa-gun, Toyama-ken (JP)
(74) Representative: Luckhurst, Anthony Henry William
(86) International application number: PCT/JP2002/006848
(87) International publication number: WO 2003/030672

(56) References cited:
- EP-A1- 1 118 443
- EP-A1- 1 208 761
- WO-A-01/37694
- GB-A- 2 364 351
- JP-A- 5 042 010
- JP-U- 63 064 218
- US-A- 5 945 193
- US-A- 6 106 051

## Description

### Technical Field

The present invention relates to a field of an engaging/disengaging tool, and particularly, the present invention relates to a fastener strip having magnetic bodies not distributed through an entire volume thereof but distributed in individual discontinuous identification areas thereof. A method and a device for manufacturing the fastener strip are also described.

### Background Art

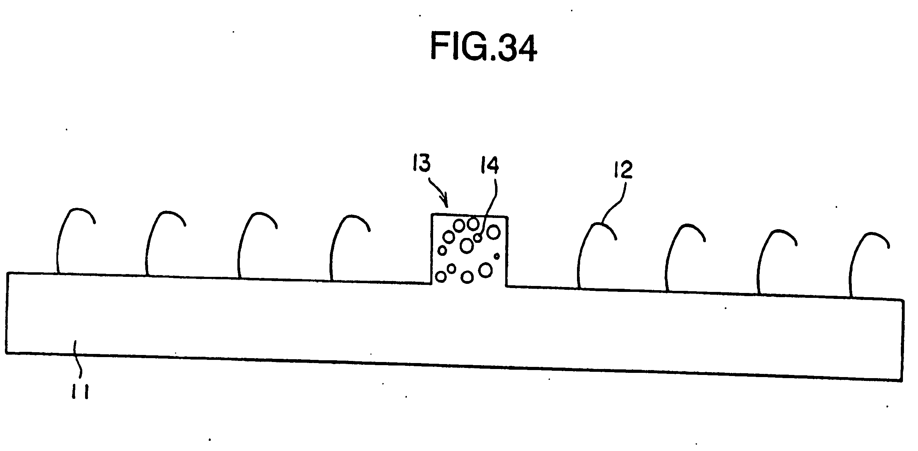

For example, a sheet for a motor vehicle or the like is made by a structure that a oushion body is covered with a skin material on the cushion body, and a structure having a concave shape which satisfies conditions of keeping a seating posture and no fatigue from seating for long time ergonomically is adopted. In such a concave shaped sheet, in order to prevent the skin material from floating from the cushion body at a concave shaped portion, by using a foam molded article with a fastener strip 10 fixed on the concave shaped portion as shown in FIG. 34 as a cushion body 9, the fastener strip 10 that is integrally formed to the cushion body 9 and a fastener strip (not shown) attached on a liner of the skin material are adhered and engaged so as to evade floating of the skin material.

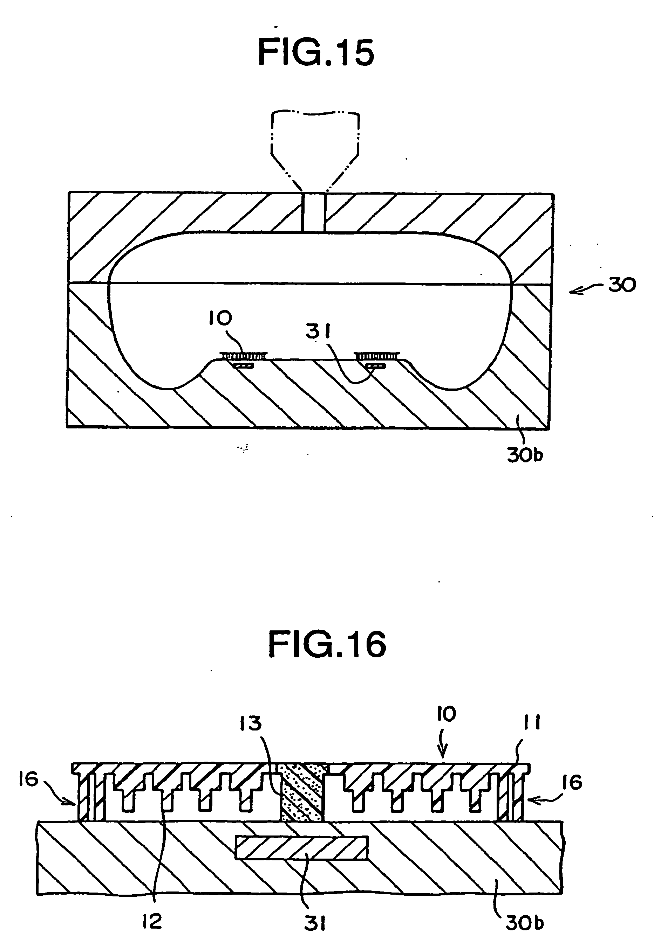

FIG. 15 shows an example of manufacturing a cushion body with the fastener strip integrally formed on the surface of the foam molded article. As shown in the drawing, by mounting an engaging element surface of the fastener strip 10 in a desired forming die 30 as opposing to a surface of the forming die, injecting a foam resin raw material into the forming die 30, and foaming the foam resin raw material, a cushion body as a foam molded article is manufactured, in which the fastener strip 10 is integrally formed thereon.

As a method for fixing the fastener strip on the surface of the forming die, conventionally, a method such that a magnetic body is provided at the side of the fastener strip and the fastener strip is fixed by this magnetic body and a magnet that is disposed within the forming die has been known.

A component capable of being magnetically sucked, namely, a magnetic material has various figurations including a metallic major component, a steel strip or a shim, a wire, a porous metal web or a woven screen or a magnetic particle.

As a configuration providing a magnetic body at the side of the fastener strip, for example, one provided with a soft magnetic tape on a film to prevent a foam resin from entering a surface of an engaging element upon molding a foam (Japanese Patent Application Laid-Open (JP-A) No. 4-109904), one sandwiching a thin steel strip between the fastener strip and a lining (USP No. 4673542), one disposing many magnetic suction members in adjacent to the both edges of the fastener strip (USP No. 5654070), one containing a magnetic inactive substance interacting with a magnetic attractant in a substrate of the fastener strip (USP No. 5725928), one embedding a porous magnetic web in the substrate of the fastener strip (USP No. 5945193) and the like are known.

As a magnetic body to be used here, a configuration that the magnetic body is disposed substantially on an entire surface of the fastener strip in order to raise a suction force for a magnet in a forming die (JP-A-4-109904, USP Nos. 4673542, 5725928, and 5945193) or a configuration disposing many magnetic suction members in adjacent to the both edges of the substrate of the fastener strip (USP No. 5654070) is adopted.

In addition, for example, USP No. 5500268 discloses a magnetic particle to be contained in a foam seal used for, for example, preventing an engaging element from being contaminated upon molding. Each publication of USP Nos. 4563380, 4710414 and 4784890 discloses that the magnetic particles are blended in an adhesive agent to be used for attaching various elements of the fastener strip such as a fixed layer or a backing layer. USP No. 5540970 discloses a fastener strip having magnetic particles that are embedded in a container to encircle a hook so as to prevent contamination. This container is detached later, after finishing a molding process. Further, in USP No. 5945193, a backing disposed on a rear surface or a base portion of a fastener base portion, a porous metal web embedded in a substrate layer, or a woven screen is described.

Further, each publication of USP Nos. 5725928 and 5932311 describes a touch fastener and a method for manufacturing the same, respectively. In these publications, the magnetic particles are contained in an entire hook or a base portion layer, or in an entire substrate layer to be pushed out together with the hook and the base portion layer. This is attained by blending a ferromagnet in a flow of resin to be supplied to an entire extruding machine in advance. In the same way, a publication of USP No. 5766723 describes a fastener assembly and here, the magnetic particles are contained in an entire hook and a base portion layer, or in an entire backing layer to be disposed to the hook and the base portion layer thereafter.

These prior arts have a serious problem such that the magnetic particles are blended in the hook of the fastener strip and the entire base portion, and/or in a resin forming an entire base portion if the substrate layer is used. As a result, the magnetic particles are observed not only in an area where a magnetic suction is desired but also in the base portion and/or through an entire volume of the substrate. This method is wasteful because more magnetic particles are used, compared with the amount of the magnetic particles which are required actually. An effect may be decreased to such a degree that the magnetic particles in the resin have an affect on the other properties of the fastener strip.

In addition, since the conventional fastener strip is configured focusing on enhancement of the magnetic force, when a fastener strip is merely mounted on a forming die, the fastener strip is sucked and fixed on that position and it is difficult to position the fastener strip. Therefore, it is necessary to place the fastener strips one by one as positioning them by hand. This results in a problem such that workability for mounting the fastener strip is low and it takes long time for a mounting operation, so that improvement for this has been required.

On the other hand, upon molding the cushion body or the like, the foam resin enters between the engaging elements of the fastener strip to contaminate the engaging elements and the engagement function thereof is lowered.

Therefore, in this technical field, various suggestions are made with respect to means for sealing the engaging element such as a hook or a loop of the fastener strip to be embedded and molded in the cushion body or the like to prevent it from being contaminated in a molding process. Various sealing means that are already disclosed may include the followings.

In order to prevent the engagement function of the engaging element from being lowered, for example, it is suggested that a strip body and a stopper member are formed at the both edges of the fastener strip so as to prevent the foam resin from entering the surface of the engaging element by these strip body and stopper member (Japanese Utility Model Application Publication (JP-Y) Nos. 4-53685, and 6-37712), and further, it is suggested that the entire engaging element is covered with a film so as to prevent the foam resin from entering the surface of the engaging element upon molding (JP-A-60-179003).

Also in U.S.A., for example, in each publication of USP Nos. 5500268 and 5614045 which are attached to Billarant, a foam strip disposed along a side portion of a fastener layer is disclosed. Further, in a publication of USP No. 5766723, a foam layer forming an enclosure seal around a hook or a loop is disclosed. In each publication of USP Nos. 5900303 and 5688576, a projecting portion made of plastic forming a seal for a wall of a concave portion of a metal mold is disclosed. The similar sealing lip disposed along each side portion of the fastener strip is disclosed in a publication of USP No. 5061540.

Each publication of USP Nos. 4693921, 5766385, and 4563380 suggests the means that is different from these. Here, a protection cover shaped in a film or a tape is disposed on a hook or a loop element, and after completing the molding process, this protection cover is removed.

However, in most of the above-described methods, the sealing means is not made of the same materials as the fastener layer and rather, this involves a serious defect that the sealing means is made of a different material which is, attached to the foreside of the fastener layer afterwards. This makes a manufacturing cost higher and more complex as compared to the fastener strip having the sealing means that is integrally formed from the same material as the fastener layer.

In addition, the prior art adopting the protection cover in order to evade contamination has the following defects. In other words, the cover should be removed after completing the molding, and another process should be often added to the molding process, which is complex and takes time.

EP1118443 relates to an insert for overmolding in seats or cushions. There is provided a core with downward extending anchorage elements, upward extending ramps and a magnetisable material on the upper surface. In use, the core is placed between two walls in the bottom of a mold so the ramps rest on the walls. The core is held in place by a magnet located between the walls and the base of the mold.

According to some objects and effects of the present invention, it is possible to accurately position the magnetic body in the base portion, in the member to be integrally molded with the base portion, or in the substrate layer, so that there is no necessity to dispose this magnetic body across the width of the fastener strip entirety. As an example, the magnetic particles can be entered only in the foam or in the base portion below the side portion seal of the other type, so that the magnetic force only acts on the side portion of the strip. In another example, the magnetic particles or a long magnetic body can be entered only along a center in a longitudinal direction of the strip and thereby, the strip can be easily disposed in a metal mold.

Generally, if a fastener strip having a narrow and long magnetic body is mounted in a magnetic field generated by a magnet, the both ends in a longitudinal direction of the fastener strip face to a bipolar direction of the magnet by magnetism, and this results in that the both ends in the longitudinal direction correspond with the bipolar direction of the magnet. By using this phenomenon, it is easy to position the strip in the metal mold.

According to a method relating to the present invention, the resin containing the magnetic particles can be removed quickly and easily from an extruding machine or another device. Therefore, since it is not necessary to remove the magnetic particles from the entire extruding machine, cycle while extruding the strip with or without the magnetic particles by using the same device becomes simple. Alternately, only a portion where the magnetic particles moves may be cleaned up. In accordance to needs, a line or a passage in which the magnetic particles are introduced can be opened or closed. Thereby, it is possible to increase flexibility in the manufacturing process and to make the cycle time shorter.

By injecting the magnetic particles only in a required portion, waste can be cut down and clean-up time of the device can be made shorter, and this makes it possible to lower a manufacturing cost of the fastener strip.

Within a range that the magnetic particle in the resin or the magnetic body has adverse affects on other properties of the fastener strip, it is possible to limit these affects on a particularly defined scope.

In addition, another main purpose and functional effects are to reduce the number of steps in the manufacturing process and to reduce the manufacturing cost. By using a foaming dye and a wheel that are generally available, a staggered member forming a seal to prevent contamination by entering of a foam resin upon molding a foam product can be simply made of the same element as the remaining portion of the fastener layer.

An entering amount of the foam to be hardened can be controller so as to f1x the fastener strip to an object to be molded at a constant rate by the staggered member. As a practical matter, an interval of the staggered members can be changed so that the foam penetrates more in the outside edge of the strip to have the optimum fixing of the fastener strip, or in order to have the optimum fixing of the fastener strip, it can be changed from that minimum amounts of penetration till no penetration at the predetermined length inside from the edge.

Due to a discontinuous property of the staggered member, namely, a property not to form a continuous hard wall, an edge of the fastener strip is flexible along a length of the fastener strip in accordance to need and it can correspond to a curved or concavo-convex surface of a metal mold. Nevertheless, the fastener strip can realize excellent sealing.

With reference to the drawings and the explanation below, other objects and effects of the present invention will be obvious.

### Disclosure of Invention

The present invention provides a fastener strip having a magnetic material capable of being magnetically sucked and not distributed through the entire volume of the strip and contained in individual discontinuous identification areas thereof. Further, a method for manufacturing such a strip is also described below.

A basic configuration of the present invention comprises a fastener strip according to claim 1.

Since the magnetic body is not disposed on the entire surface of the substrate but disposed in the discontinuous area which is a part of the substrate, unnecessary usage of the magnetic material is evaded and further, it is possible to take fulll advantage of a action force of magnetism.

The magnetic body is disposed in the discontinuous area of the substrate along a longitudinal direction of the substrate, and preferably the magnetic body is disposed in substantially a lateral center of the discontinuous area of the substrate along the longitudinal direction, or the magnetic body is disposed in a discontinuous area of the substrate along a lateral side portion of the substrate in the longitudinal direction, because it is easy to give a directionality to the fastener strip upon positioning on a forming die. In the case where the magnetic body is disposed in a longitudinal direction along the lateral side portion of the substrate, this magnetic body also functions as a wall such as a molding resin or the like, which prevents a foam resin from entering an area on which an engaging element is formed upon molding a cushion or the like.

Further, the magnetic body is described as having a narrow figuration that is extended in a longitudinal direction, of the substrate and further, depending on a magnet disposed at a predetermined position of a forming die, the magnetic body has a sufficient magnetism for allowing the longitudinal both ends of the fastener strip to correspond with a bipolar direction of this magnet.

Generally, when a narrow and long magnetic body is placed in a magnetic field caused by the magnet, the magnetic body is magnetized by the magnetic field. At the both ends in a longitudinal direction of the magnetized magnetic body. magnetic poles of + and - are caused, respectively. In this case, assuming that a magnetic flux density of the magnet is defined as H, and the magnetic poles at the both ends of this magnetic body have the same strength and the strength is defined as m, a force of F = mH may act on the both ends of the magnetic body, respectively. By this force, a moving force may act on this magnetic body to allow the magnetic body to face in the bipolar direction of the magnet and the magnetic body is made in a condition facing to the bipolar direction of the magnet. Further, the magnetic body is magnetically sucked to a vicinity of a center of the both magnetic poles.

In other words, if the fastener strip having a narrow and long magnetic body is mounted in the magnetic field caused by the magnet, the both ends in a longitudinal direction of the fastener strip face to the direction of the both poles of the magnet by the magnetism, so that the both ends in a longitudinal direction correspond with the direction of the both poles of the magnet, as described above.

However, when the long magnetic body is not narrow but wide, if the fastener strip having this wide magnetic body is mounted on the magnet with the longitudinal direction of this magnetic body inclined to the direction of the both poles of the magnet, the longitudinal direction of this magnetic body is magnetically sucked as it is inclined to the both magnetic poles of the magnet. As a result, the longitudinal direction of the fastener strip does not face to the bipolar direction of the magnet. Although the same force as the above-described one also acts on the long and wide magnetic body, as compared to movement due to the magnetism of the narrow magnetic body, the movement of the wide magnetic body is small because the above-described force does not act on the wide magnetic body as a magnetism sufficient for facing this wide magnetic body to the bipolar direction of the magnet.

The above-described phenomenon caused by the long and narrow magnetic body and the magnet is applied to the fastener strip. Only by providing the continuous narrow magnetic body along a longitudinal direction of a fastener strip substrate and mounting this fastener strip in the vicinity of a predetermined mounting place on the forming die, the above-described phenomenon can be used and the fastener strip can be positioned and fixed on a desired position even if a positional relation between the longitudinal direction of the fastener strip substrate and a position of the both magnetic poles of the magnet located on the mounting position is not taken seriously.

A narrow width of the magnetic body can be changed depending on the size of the fastener strip on which the same narrow magnetic body is displaced and the strength of the magnetic field of the magnet that is located in the forming die. If the strength of the magnetic poles at the both ends of the magnetic body caused by this magnet and a force acting on this magnetic body by the magnetic flux density of this magnet can be set at a sufficient level to correspond the both ends of a longitudinal direction of the fastener strip with the direction of the both poles of this magnet, an arbitrary width can be set. In addition, the magnetic body having a narrow figuration extending in the longitudinal direction of the fastener strip substrate is described as being continued in the longitudinal direction. Further, it is described as being discontinuous in the longitudinal direction. Both of a continuous figuration and a discontinuous figuration as a figuration of the magnetic body have a function as a magnetic body causing the above-described phenomena.

Particularly, when the magnetic body is disposed at a center of the substrate in a width direction or at a lateral edge thereof so as to be extended along a longitudinal direction, it is possible to act a suction force by the magnetic body and the magnet at a center of the fastener strip and in addition to this effect, it possible to strongly move the both ends in the longitudinal direction at a center in a width direction of the above-described fastener strip toward the direction of the both poles of the magnet.

The above-described magnetic body is made of at least one element of a synthetic resin-made projecting portion in which the magnetic particles are mixed, and a surface of the projecting portion is preferably covered with a synthetic resin material made of the same material as the substrate. Due to this configuration, when the resin used for the magnetic body and the resin used for the fastener strip lack in affinity, separation between the projecting portion and the main body of the fastener strip can be evaded.

The above-described magnetic body may be disposed on the above-described substrate itself, however, it can be made into at least one synthetic resin projecting portion including the magnetic material formed on the surface of the substrate. In this time, a magnetic material to be contained in the synthetic resin projecting portion may be a magnetic particle to be mixed or added to the synthetic resin material, and it is also described as being a long magnetic material such as a magnetic metal wire rod or a magnetic tape, or a woven and knitted fabric that is woven and knitted from a synthetic resin fiber having a metal fiber or a magnetic particle mixed therein or a nonwoven cloth.

In addition, the synthetic resin projecting portions may be continuously formed in a longitudinal direction of the substrate, however, valley portions may be formed at equal intervals along the longitudinal direction of the substrate. Thus, forming the valley portions on the projecting portion at equal intervals along the longitudinal direction of the substrate, the projecting portion can be easily bent at the valley portion and this makes the fastener strip flexible.

When the magnetic material is made of the magnetic particle, the magnetic particle such as iron, cobalt, and nickel is preferable. Upon forming the projecting portion, by using the synthetic resin material having the magnetic particles mixed therein, the projecting portion is molded; or after molding the projecting portion, by applying coating having the magnetic particles on the upper surface of the projecting portion or laminating the resin film containing the magnetic particles on the projecting portion, the projecting portion can be made.

In addition, when the magnetic material is made of the long magnetic material, the long magnetic body can be extended along the above-mentioned projecting portion, and particularly, the long magnetic material is extended with inserted through the inside of the projecting portion so that the long magnetic material is partially exposed at the valley portion of the projecting portion. Such a configuration makes it easy to integrate the projecting portion made of the synthetic resin material and the long magnetic material, of which physical properties are different each other, and the configuration can make the fastener strip flexible by the valley portion which is formed at the projecting portion.

Moreover, it is possible to fix the long magnetic material on the upper surface of the above-mentioned projecting portion. According to such a structure of the magnetic body, when the fastener strip is mounted on the forming die, the magnet provided on the forming die and the long magnetic material are arranged in the vicinity each other, and this results in obtaining of a reliable and strong magnetic suction force.

The above-described magnetic body can be also made of a plurality of engaging elements, which contain the magnetic member and of which base parts are connected to each other. The magnetic body having such a configuration has no need to form a cavity for the projecting portion separately. As a result, the plural engaging elements containing the magnetic material that are arranged in a row in a longitudinal direction function as the long magnetic body when mounting the fastener strip on the forming die, and after the fastener strip is integrally formed on the surface of the foam molded article, they can carry out an original function of the engaging element.

The above-described projecting portion including the engaging element row that functions as the above-mentioned magnetic body is made of a thermoplastic resin to be integrally molded on the substrate. The thermoplastic resin may include polyester, polyamide, polyolefin, polyvinyl chloride, polyurethane, polyolefin erastomer, polyester erastomer, polyamide erastomer, polyisoprene, and other synthetic resin such as a resin composition containing a thermoplastic polymer.

It is preferable that the above-described magnetic body combining a function as a wall for preventing entering of the molding resin that is disposed along the side edge of the substrate is made of a plurality of wall potions that are arranged in a row at predetermined intervals. In the meantime, according to the present intention, when the magnetic body extended along a longitudinal direction is located at a center portion in a width direction of the substrate, the above-mentioned wall portion is not necessary to be the magnetic body. Thus, in accordance with the present invention two or more rows of the wall portions are disposed at predetermine intervals and they are arranged in a staggered shape in a row direction. When the strip is embedded and molded in the object such as a foam or the like, the wall portion may form a seal effective for preventing contamination of a hook and a loop. If is also described that when molding the wall portion and the substrate integrally at the same time, the configuration of the fastener strip can be made simple and without providing a faxing member separately, it is possible to enhance a function to fix the fastener strip on the molded body.

By arranging the two rows of wall portion in a staggered shape, when the foam resin is passing through a gap between the outside wall portions, a flow of the foam resin is interrupted by the inside wall portion and its direction is changed from side to side. This leads to regulate the foam resin passing through the gap between the inside wall portions and further, the foam resin contacts the both of the front surface and the rear surface of the outside wall portion so that the foam resin can fix the wall portion more solidly.

In the gap between the wall portions in adjacent to the width direction of the substrate, a passage having a required length in the passage direction of the foam resin is formed, and the fastener strip allows the foam resin to enter the engaging element though this passage. Resistance caused by this passage carriers out a regulation function to make the entering amount of the engaging element into the foam resin small, and carries out a function to fix the wall portion more solidly as a fixing member because a contract area between the entered foam resin and the wall portion is increased.

Further, the passage may have a dead end portion. A narrow passage is the dead end portion, namely, a dead alley, and this dead end portion can prevent the foam resin from entering the engaging element. In addition, by the dead alley, the wall portion carries out its function as a more solid fixing member. In the foam resin having passed through the gaps, further entering is regulated by a portion of the engaging element that is formed at the inside of the wall portion. A portion of the engaging element is provided with a function as an anchor member for preventing entering of the foam resin.

The substrate and the wall portion, or the substrate, the wall portion and the engaging element may be - integrally molded by the thermoplastic resin.

Each of the both side edges of the substrate may have at least two rows of the wall portions along the longitudinal direction, at least one row of the wall portions to be disposed at the most outside of the both side edges has many wall portions to be disposed along the longitudinal direction, and the inside wall portion in adjacent to these wall portions may be configured by the continuous wall portion.

Further, a plurality of engaging element groups may be defined and formed along the longitudinal direction of the surface of the substrate, and each engaging element group is surrounded by at least one wall portion and at least one lateral wall portion. Here, a plurality of engaging element groups are defined and are formed along the longitudinal direction of the surface of the substrate, each engaging element group is surrounded by at least one wall portion, and the lateral wall portion surrounding the enraging element groups prevents the foam resin from entering the engaging element.

The above-described lateral wall portion in adjacent to the engaging element group may be composed of the plural intermittent wall portions that are disposed at intervals. By the intermittent wall portions surrounding the engaging element group, the foam resin having passed through the wall portion of the both side edges can be assuredly prevented from entering the engaging element groups.

In the case where the surface of the forming die for manufacturing a foam molded article is flat, the height of the wall portion and the height of the lateral wall portion are preferably the height of the engaging element or more. When a surface fastener is mounted on the surface of the forming die, the wall portion, the lateral wall portion, and the surface of the forming die closely contact with one another, and the gaps are not formed among the wall portion, the lateral wall portion, and the surface of the forming die. Thus, it is possible to effectively prevent the foam resin between the wall portion and the surface of the forming die from entering the engaging element.

In the case where a concave portion in which the engaging element is fit is formed on the surface of the forming die for manufacturing the foam molded article, the heights of the wall portion and the lateral wall portion may be lower than the height of the engaging element. When mounting a surface fastener on the surface of the forming die, the engaging element group is fit in the concave portion on the surface of the forming die, this makes the wall portion and the lateral wall portion to closely contact each other around the concave portion, and this results in that no gap is formed among the wall portion, the lateral wall portion, and the surface of the forming die. Therefore, it is possibly to affectively prevent the foam resin between the wall portion, the lateral wall portion, and the surface of the forming die from antering the engaging element.

The fastener strip provided with the above configurations is efficiently manufactured by a manufacturing method and a manufacturing device, which are described below.

In other words, described herein is a method for manufacturing a fastener strip, comprising steps of : (a) disposing a magnetic powder substances and (b) injecting the magnetic powder substance into a discontinuous area of a substrate layer of an engaging/disengaging tool or into a discontinuous area that is provided with at least one integrated member to be carried on the substrate layer of the engaging/disengaging tool, wherein the engaging/disengaging tool can be magnetically fixed on an object.

The step of injecting the magnetic powder substance may comprise a step of extruding a plastic resin through an extruding machine and introducing the magnetic powder substance through another passage in the extruding machine. Said another passage has an outlet port that is disposed on substantially a center of a front surface of the extruding machine. A mixture of the plastic resin and the magnetic powder substance is extruded to the substrate of the fastener strip and the projecting portion through the another passage in the extruding machine.

Further, the step of injecting the magnetic powder substance may include a step of extruding the plastic resin through the extruding machine toward and extruding the magnetic body through another line, toward a die wheel in adjacent to the extruding machine. A cavity for molding this magnetic body may be disposed at substantially a center and/or a side edge of the periphery surface of the die wheel.

As a manufacturing device for manufacturing the fastener strip, there is disclosed a device for manufacturing a fastener strip, comprising: a magnetic body molding portion having a first extruding die, which has an extruding port for extruding a synthetic resin material in a molten state in which magnetic powders are mixed, and a first die wheel which rotates around a horizontal axis as facing to the extruding port and which has a magnetic body molding cavity that is formed along a periphery surface of the rotational direction; and a fastener strip molding portion having a second extruding die having an extruding port for extruding a synthetic resin in a molted state, a second die wheel which rotates around a horizontal axis as facing to the extruding port and which has a fastener strip molding cavity that is formed along a periphery surface in the rotational direction, and a magnetic body guide portion which is located at an upstream side in a rotational direction of the second die wheel with respect to the second extruding die and guides the magnetic molded article that is molded by the magnetic body moulding portion to a predetermined position in the fastener strip molding cavity, therein the magnetic body moulding cavity includes concave portions for projecting portions having narrow configurations, which are continued in a peripheral direction or are intermittently disposed, and the fastener strip molding cavity includes concave portions for engaging elements that are disposed at a predetermined pitch in a peripheral direction, and concave portions for accommodating the magnetic molded article that are molded by the magnetic body molding portion.

In other words, the device for manufacturing the fastener strip may be characterized In that a pair of manufacturing devices (a magnetic body molding portion and a fastener strip molding portion) comprising an extruding die having an extruding port for extruding a synthetic resin material in a molten state, and a die wheel which rotates around a horizontal axis as facing to the extruding port and has molding cavities that are formed along a periphery surface of the rotational direction is provided, and one manufacturing device (the magnetic body molding portion) manufactures a magnetic molded article and the other manufacturing device (the fastener strip molding portion) manufactures a fastener strip molded article in which this magnetic molded article is integrally molded.

In the first die wheel, there is formed the magnetic body molding cavity including concave portions for projecting portions having narrow configurations, which are continued in a peripheral direction or are intermittently disposed, and in the second die wheel, there is formed the fastener strip molding cavity including concave portions for engaging elements that are disposed at a predetermined pitch in a peripheral direction, and concave portions for accommodating the magnetic molded article molded by the magnetic body molding portion.

In the meantime, a clearance is formed between the extruding port and the die wheel, and the projecting portions molded in the concave portions for the projecting portion, which are intermittently disposed by this clearance portion, are continuously molded.

By using the fastener strip manufacturing device having the configuration, a synthetic resin material having magnetic powders mixed therein and in a molten state is extruded from a first extruding die extruding port, and the synthetic resin material is continuously filled in the magnetic body molding cavity while rotating the first die wheel; and then, a magnetic body molded article is peeled off from a peripheral surface of the first die wheel. In the same way, a synthetic resin material in a molten state is extruded from a second extruding die extruding port, and the synthetic resin material is continuously filled in the fastener strip molding cavity while rotating the second die wheel; and then, the magnetic body molded article is continuously supplied to the concave portion for accommodation in the fastener strip molding cavity through the magnetic body guide portion. Here, after integrally welding the synthetic resin material with the magnetic body molded article, a fastener strip molded article including the engaging element and a magnetic body having a narrow configuration is peeled off from the second die wheel. Thus, a fastener strip is manufactured.

In other words, by filling the synthetic resin in a molten state with the magnetic particles mixed therein in the magnetic body molding cavity to manufacture a magnetic molded article as the projecting portion of the magnetic body, and continuously supplying this magnetic molded article in the fastener strip molding cavity through the magnetic body guide portion, a fastener strip having the magnetic body is manufactured.

By taking up the magnetic body molded article molded by the first die wheel by a take-up real or the like once, and supplying this magnetic body molded article to the second die wheel while rewinding the magnetic body molded article from this real or the like, it is possible to continuously manufacture the fastener strip having the magnetic body.

In addition, it is also possible to continuously manufacture the fastener strip having the magnetic body by supplying the magnetic molded article molded by the first die wheel not through the take-up real or the like to the second die wheel as it is through the magnetic body guide portion. In the meantime, when supplying the magnetic molded article through the take-up real or the like, a dancer roller is disposed between the take-up real or the like and the second die wheel, and when supplying the magnetic molded article not through the take-up real or the like, a dancer roller is disposed between the second die wheel and a raw material guide port, so that it is possible to prevent a slack of the magnetic body molded article to be continuously manufactured and to adjust a tensile force.

As a cross sectional configuration of the magnetic body guide portion, any figuration may be adopted if it is a figuration to reliably guide the magnetic body molded article in the concave portion for accommodating the magnetic body molded article in the fastener strip molding cavity such as a figuration similar to a cross sectional figuration of the magnetic body molded article or a circular figuration.

According to an example of another device for manufacturing the fastener strip, there is provided a magnetic body molding portion which is located at an upstream side in a rotational direction of the first die wheel with respect to the first extruding die and which guides the long magnetic material to a predetermined position of the concave portion for the projecting portion in the magnetic body molding cavity. The synthetic resin material in the molten state is extruded from the first extruding die to be filled in the magnetic body molding cavity, which is formed in the first die wheel. On the other hand, the long magnetic body is guided separately through the magnetic material guide portion to be introduced in the magnetic body molding cavity, and this introduced long magnetic body is integrated with the molten resin filled in the magnetic body molding cavity to be molded. As same as the above-described method, this long magnetic body may mold the fastener strip containing the engaging element and the narrow magnetic body by supplying the magnetic body molded article to the concave portion for accommodation in the fastener strip molding cavity through the magnetic body guide portion.

The magnetic body guide portion also can be formed in the first extruding die. By forming the magnetic body guide portion for guiding the long magnet body in the first extruding die, a guide front end portion of this magnetic body guide portion can be disposed close to the concave portion for the projecting portion of the magnetic body molding cavity. Therefore, it is possible to guide the long magnetic body to a predetermined position more reliably.

The above-described fastener strip manufacturing device is provided with a pair of manufacturing devices (a magnetic body molding portion and a fastener strip molding portion) composed of the extruding die and the die wheel, however, there is a fastener strip manufacturing device composed of one set of the extruding die and the die wheel.

In other words, the fastener strip manufacturing device is provided with an extruding die having a pair of extruding ports for extruding a synthetic resin material in a molten state separately; and a die wheel which rotates around a horizontal axis as facing to the extruding port and has a magnetic body molding cavity and a fastener strip molding cavity that are formed along a periphery surface of the rotational direction. The magnetic body molding cavity includes concave portions for projecting portions having narrow configurations, which are continued in a peripheral direction or are intermittently disposed; and the fastener strip molding cavity includes concave portions for engaging elements that are disposed at a predetermined pitch in a peripheral direction. The pair of extruding ports is formed in the extruding die at upper and lower positions along a rotational direction of the die wheel, the extruding port on the upper position has a figuration so as to locally extrude the synthetic resin material in the molten state with the magnetic particles mixed therein to the magnetic body molding cavity, and the extruding port on the lower position has a figuration in which the synthetic resin material in the molten state is extruded to the fastener strip molding cavity.

In other words, the magnetic body molding cavity and the fastener strip molding cavity are formed on the same periphery surface of the die wheel, on these cavities, a molding surface for molding the magnetic body is formed, which includes the concave portions for the narrow projecting portion which are continuously or intermittently disposed in a peripheral direction, and a molding surface for molding the fastener strip is formed, which includes the concave portions the engaging element which are disposed at a predetermined pitch in the peripheral direction.

Further, a pair of extruding ports is formed in the extruding die at upper and lower positions along a rotational direction of the die wheel, and this extruding port has a figuration for locally extruding the synthetic resin to fill the molten synthetic resin intensively in the magnetic body molding cavity from the extruding port in order to extrude the synthetic resin material in the molten state with the magnetic particles mixed therein from the extruding port on the upper position to the magnetic body molding cavity. On the other hand, the extruding port on the lower position has a figuration in which the synthetic resin material in the molten state is extruded to the fastener strip molding cavity. By using this fastener strip manufacturing device, a fastener strip having a magnetic body can be manufactured in one step.

By using this fastener strip manufacturing device, the synthetic resin material in the molten state with the magnetic particles mixed therein is extruded from the extruding port on the upper position, and by rotating the die wheel, this synthetic resin material is continuously filled in the magnetic body molding cavity. On the other hand, the synthetic resin in the molted state is extruded from the extruding port on the lower position so as to continuously fill the synthetic resin in the fastener strip molding cavity that is formed on this die wheel. By peeling off the fastener strip molded article including the obtained engaging element and the narrow magnetic body from this die wheel, it is possible to manufacture a fastener strip having a magnetic body as a final product in one step.

In addition, in the above-described fastener strip manufacturing device, upon manufacturing a magnetic body molded article, in place of using the synthetic resin material in the molten state with the magnetic particles mixed therein, by providing a guide portion of a long magnetic material, the long magnetic material is continuously supplied to a predetermined position in the magnetic body molding cavity through this guide portion and this makes it also possible to continuously manufacture the magnetic body including the long magnetic material. It is defined that the guide portion of the long magnetic material is formed in the extruding die. In this case, if a magnetic material guide portion for guiding the long magnetic material is formed in the extruding die, a guide front end of this magnetic material guide can be disposed closed to the concave portion for the projecting portion of the magnetic body molding cavity.

Furthermore, extruding the synthetic resin material in the molten state from the extruding port of the extruding die, continuously filling this synthetic resin material in the molding cavities by rotating the die wheel, and continuously manufacturing the fastener strip molded article including the enraging element and the narrow projecting portion, and then, by laminating a layer containing the magnetic particles or by coating a layer containing the magnetic particles at least on the upper surface of the projecting portion, a magnetic body can be formed.

It is possible to carry out a laminating processing for a film or the like containing the magnetic particles or a coating processing by a resin and a coating containing the magnetic particles only on the upper surface of the projecting portion. Alternatively, these steps can be carried out on the surface portion of the projecting portion along a longitudinal direction of the substrate. Further, these processings can be carried out across the entire projecting portion.

### Brief Description of Drawings

FIG. 1 is a top view of a fastener strip in accordance with a construction related to the present invention, showing a magnetic body at a center row and magnetic particles mixed in the magnetic body.
FIG. 2 is a view of a cut end portion of the fastener strip.
FIG. 3 is a top view of another construction stated to the present invention, in which a narrow magnetic body having the magnetic particles therein is disposed at an edge of right and left sides of the fastener strip.
FIG. 4 is a top view of another construction reflated to the present invention, in which a magnetic body at a center row is continued.
FIG. 5 is a perspective view of a fastener strip showing an embodiment of the present invention.
FIG. 6 is an arrow cross sectional view taken along a line VI-VI in FIG. 5.
FIG. 7 is an arrow cross sectional view taken along a line VII-VII in FIG. 6.
FIG. 8 is a cross sectional view taken along a line VIII-VIII in FIG. 6.
FIG. 9 is a top view of further another embodiment, of which wall portion has unfixed intervals, namely, different intervals.
FIG. 10 is a top view of still another embodiment, which is identical with PIG. 9 except that a plurality of lateral wall portions are periodically disposed along a length of a fastener layer.
FIG. 11 is a top view of still another embodiment having a plurality of surrounding wall portions to surround hook elements of a fastener strip.
FIG. 12 is a partial plan view of a fastener strip in accordance with a construction related to the present invention, in which two rows of upright walls are formed at a lateral edge and the upright wall at the inner side is continued.
FIG. 13 is a perspective view of a fastener strip, in which an engaging element group is surrounded from four directions by upright walls composed of many wall portions.
FIG. 14 is a perspective view of a fastener strip in accordance with a construction related to the present invention, in which the upright walls surrounding the engaging element group are composed of a continuous wall portion.
FIG. 15 is a cross sectional view showing a condition in a forming die of a foam body sheet on which the fastener strip is amounted.
FIG. 16 is a cross sectional view of a major part showing a condition in which the fastener strip is mounted on a lower die of the forming die.
FIG. 17 is a cross sectional view of a major part when a foam resin material is injected in the forming die.
FIG. 18 is a martial plan view showing a condition in which the foam resin material enters between the wall portions of a wall for preventing entering of the foam resin material.
FIG. 19 is a cross sectional view showing an example of a magnetic body.
FIG. 20 is a cross sectional view showing another example of the magnetic body.
FIG. 21 is a cross sectional view showing still another example of the magnetic body.
FIG. 22 is a perspective view showing another embodiment of a fastener strip.
FIG. 23 is a cross sectional view showing another example of the magnetic body.
FIG. 24 is a cross sectional view showing another example of the magnetic body.
FIG. 25 is an arrow cross sectional view taken along a line XIX-XIX in FIG. 24.
FIG. 26 is a cross sectional view showing still another example of the magnetic body.
FIG. 27 is an arrow cross sectional view taken along a line XXI-XXI in FIG. 26.
FIG. 28 is a cross sectional view showing still another example of the magnetic body.
FIG. 29 is a side view of a fastener strip extruding process particularly showing supply of replenishment particles and a nozzle of the replenishment particles.
FIG. 30 is a front view of an extruding device and replenishment particles showing outlet ports of a first nozzle and a replenishment particle nozzle.
FIG. 31 is a side view showing a further fastener strip extruding process with a part thereof broken.
FIG. 32 is a front view of a die wheel showing a block moulding cavity in which the magnetic particles are introduced, and a hook molding cavity.
FIG. 33 is a side cross sectional view of the embodiment in another process in which the magnetic particles are introduced in adjacent to the block molding cavity in the die wheel.
FIG. 34 is a cut end surface view showing an example of a fastener strip which is manufactured in accordance with the another process shown in FIG. 33 and in which the magnetic particles are only located in a center block.
FIG. 35 is a cross sectional view showing an arrangement relation among an extruding die, a raw material guide port, and a die wheel.
FIG. 36 is a partial cross sectional view showing a magnetic body molding cavity and a fastener strip molding cavity.
FIG. 37 is a view in which a guide portion of a metal wire material as a long magnetic material is provided.
FIG. 38 is a cross sectional view showing an arrangement relation between an extruding die in which extruding ports are provided in two directions, namely, upper and lower directions, a die wheel, and a raw material guide port.
FIG. 39 is a view in which the guide portion of the metal wire material as the long magnetic material is provided.
FIG. 40 is a perspective view of a cushion body in which a fastener strip is integrally fixed thereon.

### Best Mode for Carrying Out the Invention

On the basis of the typical embodiments, the embodiments of the present invention along with constructions related to the invention will be described with reference to the drawings in further detail below.

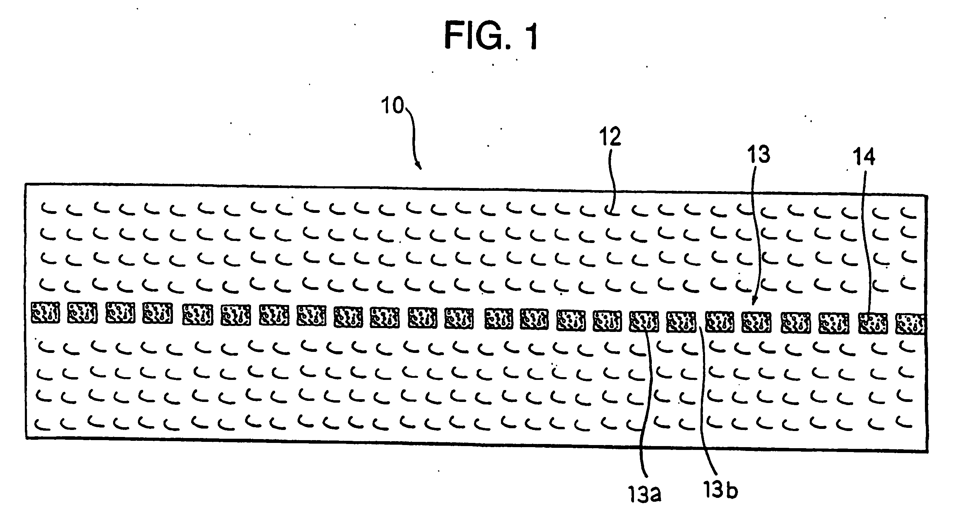

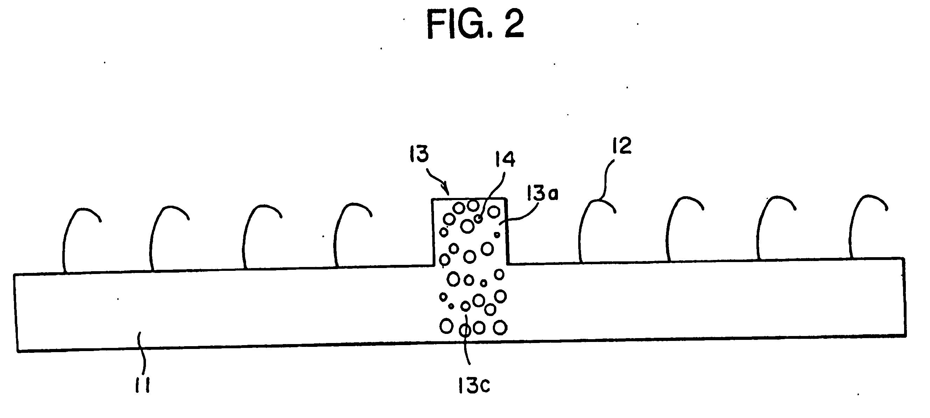

FIGS. 1 and 2 schematically illustrate a top view and a cut end portion of a construction reflated to the present invention, respectively. A fastener strip 10 having a flat substrate 11 and an engaging element 12 composed of many hook elements rising from an engaged surface of the substrate 11 further has a magnetic body 13 in a row, which rises from a surface of the substrate 11 and is disposed below substantially a center line of the fastener strip 10. The magnetic body 13 is composed of many magnetic projecting portions 13a made of a synthetic resin material in which magnetic particles 14 are mixed, and also in a raw material portion 13c of the substrate 11 below these projecting portions 13a, the above-mentioned magnetic particles 14 are mixed, and the magnetic particles 14 are not dispersed through the entire substrate 11. Accordingly, the magnetic body 13 becomes a continuous body in which valley portions 13b are formed between the projecting portions 13a.

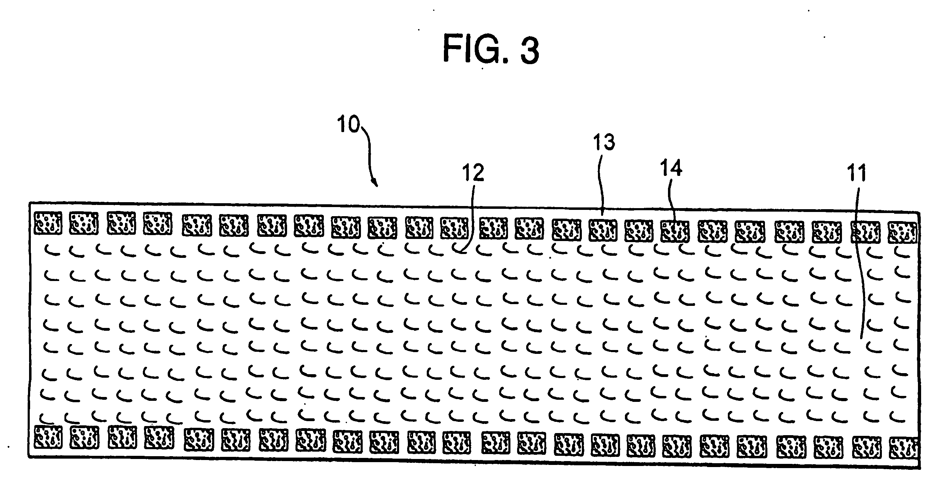

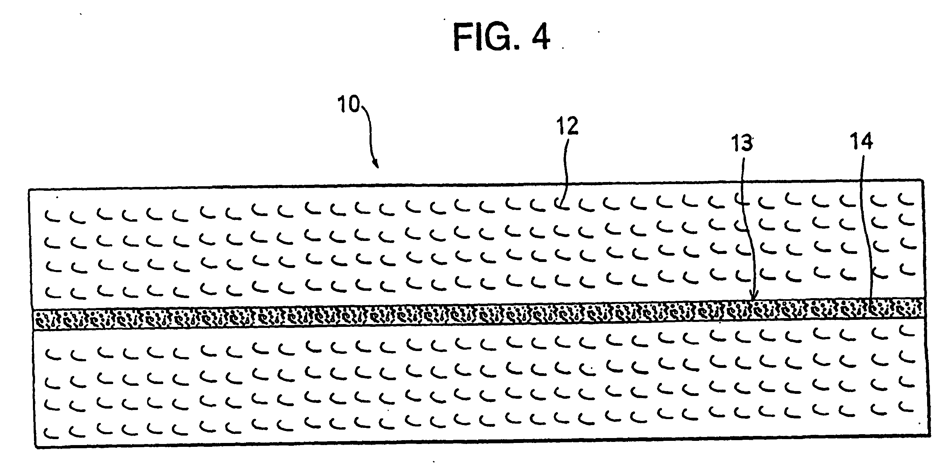

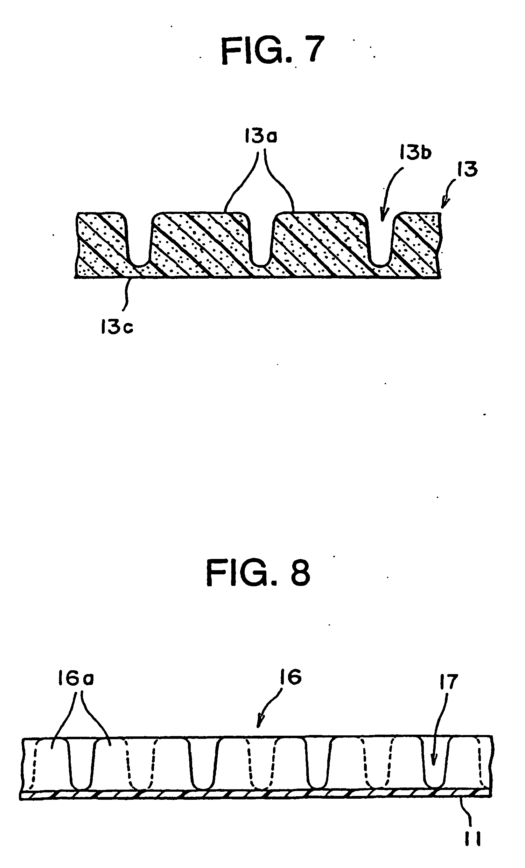

FIG8. 3 and 4 schematically illustrate another construction related to the present invention. FIG. 3 is a top view of the fastener strip 10, each row of the magnetic body 13 has magnetic particles 14 put inside the plural projecting portions 13a and each row of the magnetic body 13 is disposed at right and left side portions in a longitudinal direction of the fastener strip 10. FIG. 4 is a top view of the fastener strip 10, which rises from the surface of the substrate 11 and has the magnetic body 13 as a continuous protection, which is disposed below substantially a center line of the fastener strip 10. The other parts are identical with the main embodiments.

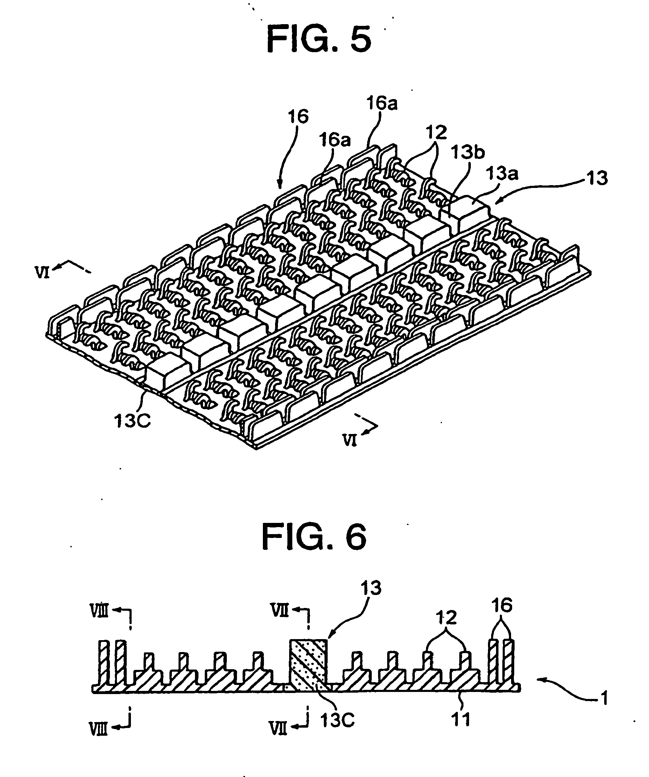

FIGS. 5 to 8 specifically further illustrate typical embodiments of the present invention.

As shown in these drawings, in the fastener strip 10 according to the present invention, many engaging elements 12 are provided on a surface of a flat substrate 11 except for the both edges, and molded resin entering preventing walls 16 made of many wall portions 16a, which are arranged on a row along a longitudinal direction thereof, are disposed on the both edges, respectively. On a center in the longitudinal direction of the substrate 11, projecting portions 13a of a magnetic body 13 are disposed in a row at equal intervals and valley portions 13b are formed therebetween. The molded resin entering preventing walls 16, the substrate 11, the engage element 12. and the projecting portion 13a can be integrally molded and formed by a thermoplastic resin.

As shown in FIGS. 5 and 6, the projecting portion 13a has a base raw material portion 13c at its base portion, and by the base raw material portion 13c, the projecting portions 13a are made into one continuous body. The base raw material portion 13c and the projecting portion 13a can be manufactured with integrally molded by a thermoplastic resin in which the magnetic particles are mixed. In addition, as shown in FIGS. 5 and 6, it is possible to form the molded resin entering preventing walls 16 made of the plurality of wall portions 16a at the both edges of the fastener strip 10.

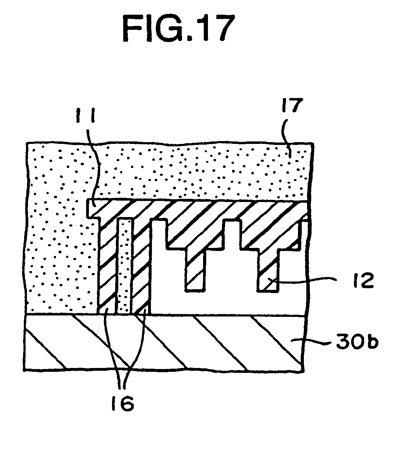

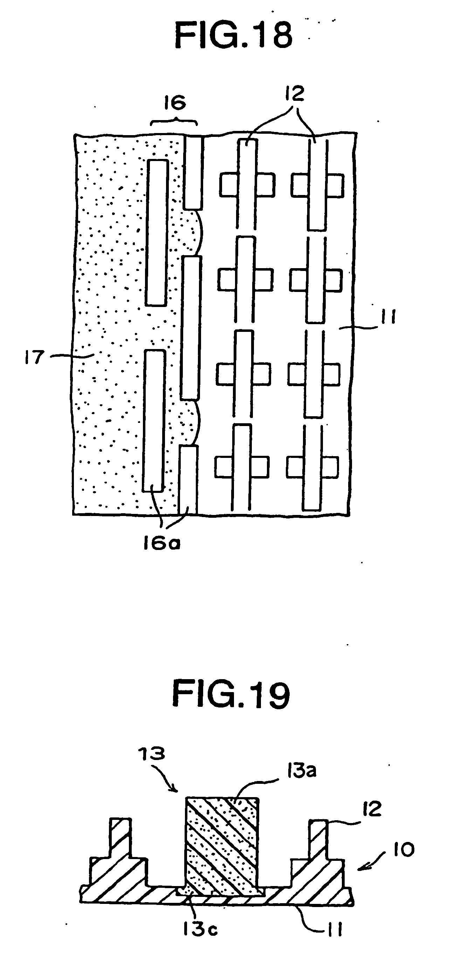

This wall portion 16a, as shown in FIGS. 17 and 18, prevents a foam resin material 17 from entering the engaging element 12 of the fastener strip upon molding a foam, and at the same time, the wall portion 16a daringly makes a portion of the foam resin material 17 enter through a gap between the adjacent wall portions 16a to fix the wall portion 16a by the entered foam resin material 17 and the foam resin material 17 at the outside of the wall portion 16a. Thereby, it is possible to integrally fix the fastener strip 10 with the foam molded article more solidly.

As shown in FIGS. 5 and 6, when providing two rows of the wall portions 16a at the both edges of the fastener strip 10, if the wall portions 16a of respective rows are disposed in a staggered shape as shown in FIGS. 5 and 8, it is possible to increase a sealing function for preventing entering of the foam resin material. In other words, the foam resin material 17 having entered through the gap between the outside wall portions 16a bumps against the inside wall portion 16a to run round to a rear surface side of the outside wall portion 16a and then, a direction of the flow is changed. In order to prevent the foam resin material 17 from entering, it is necessary that the height of the projecting portion 13a is the height of the wall portion 16a or less. When the molded resin entering preventing walls 16 is a continuous wall, it is also necessary that the height of the projecting portion 13a is the height of the wall portion 16a or less.

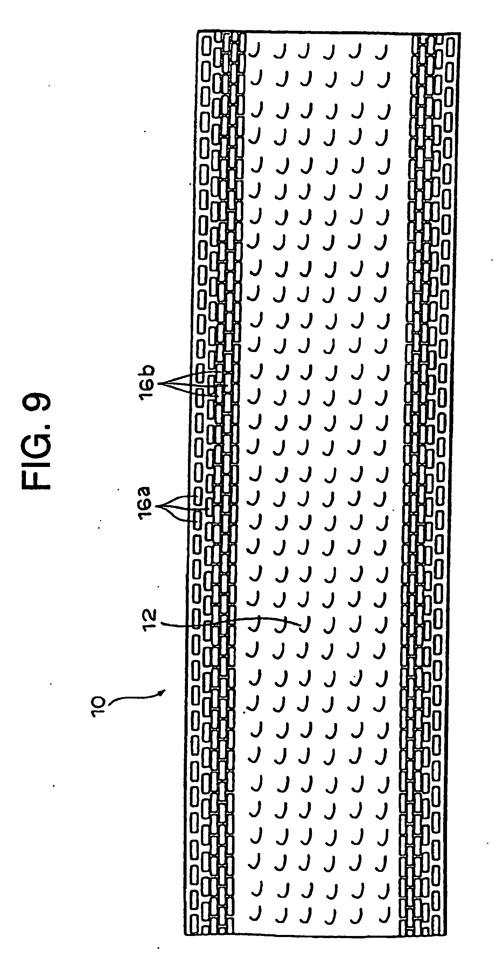

FIGS. 9 to 12 are top views of the fastener strip 10 showing various arrangement figurations of the above-described molded resin entering preventing walls 16. The engaging elements 11 as plural hooks form a fastener layer covering most of the front surface of the fastener strip 10. The plural wall portions 16a are disposed along a width direction lateral edge of the fastener strip 10, and the above-described wall portions 16a are appropriately spaced such that the foam body can enter to a degree that is regulated in a molding process. These wall portions 16a can be made into the above-describe magnetic body, or if the other are of the substrate 11 has a magnetic body, the wall portions 16a are not necessarily be a magnetic body and they may be made only of the resin material that is identical with the substrate 11.

In FIG. 9, it should be noted that the second row of the wall portions 16a, namely, the second row from the edge of the fastener strip 10 can be partially viewed through a gap in the first row of the wall portions 16a. In addition, since the wall portions 16a do not form a continuous wall along the lateral edge of the fastener strip, it is perceived that a predetermined flexibility can be maintained by the lateral edge. This flexibility has an advantage in making it possible to correspond the fastener strip 10 with a curved or concavo-convex metal mold surface, and further, making a seal function to prevent the engaging element from being contaminated possible.

FIG. 9 illustrates an arrangement example such that intervals of the wall portions are different in a width direction of the fastener strip 10. At each longitudinal edge of the fastener strip 10, two rows of wall portions 16a are disposed at the outside of three rows of the wall portions 16b with narrow intervals. The wall portions 16b with narrow intervals are configured in the same way as the wall portions 16a, however, due to the narrow intervals, there is less or no entering of the foam in the molding process. Accordingly, a combination of the wall portion 16a and the wall portion 16b makes it possible to realize both of fixing of the fastener strip 10 to the object to be molded and sealing for preventing contamination of the engaging element 11 shaped in a hook.

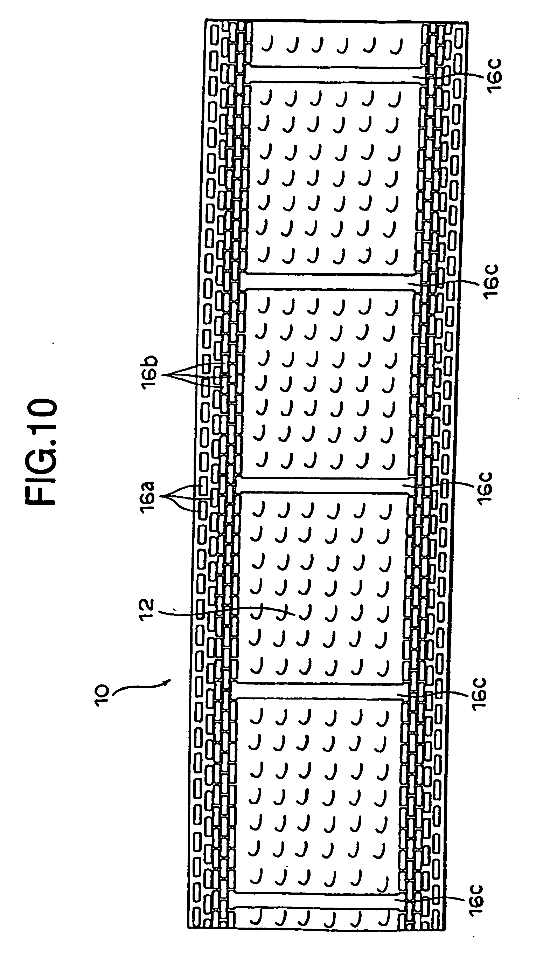

FIG. 10 illustrates another arrangement example further having a lateral wall portion for sealing the edge of the fastener strip 10 so as to prevent entering of the foam and contamination of the engaging element. In FIG. 10, lateral wall portions 160 are disposed at longitudinal both edges of many groups of the engaging elements 3. Respective lateral wall portions 160 are continued and they are extended between the wall portions 16b with the narrow intervals, which are disposed at each edge of the fastener strip 10.

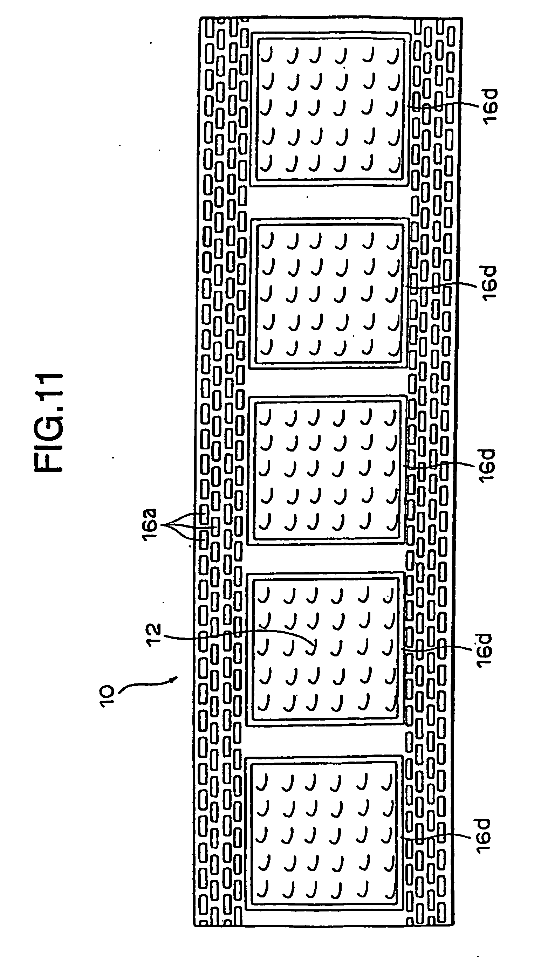

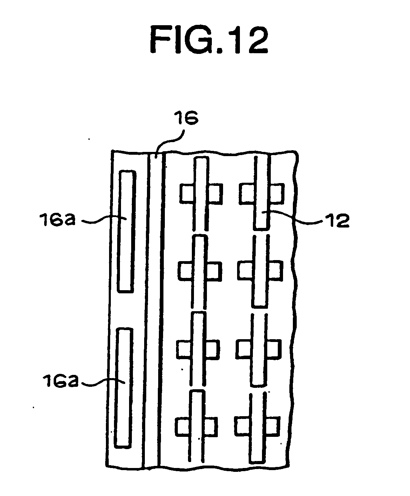

FIG. 11 illustrates another arrangement example such that surrounding wall portions 16d surrounding a group of a plurality of hook-shaped engaging elements 12 of the fastener strip 10 are continuously provided so as to surround the engaging element group in a desired area. FIG. 12 illustrates, in accordance with a construction related to the present Invention, that the wall portion at the second row is made into the continuous molded resin entering preventing wall 16. In this case, the continuous molded resin entering preventing wall 16 prevents the foam resin entered from the gap between the wall portions 16 of the first row from entering the engaging elements 12.

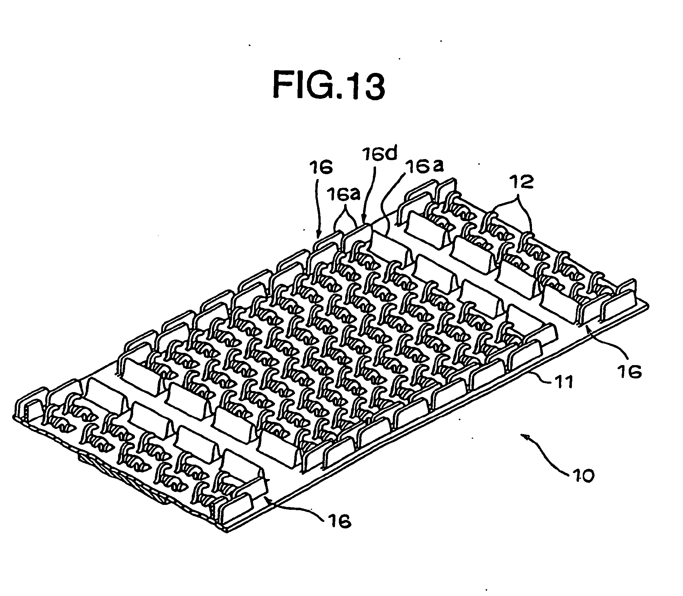

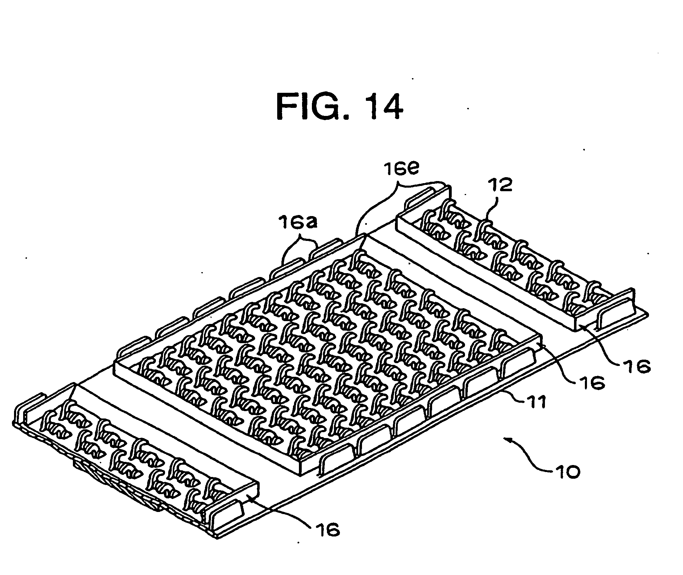

FIG. 13 illustrates a constitutional example such that the surrounding wall portions 16d are arranged at predetermined intervals to surround the group of the engaging elements 12. In this constitutional example, the foam resin entering from the gap between the respective wall portions 16a composing the surrounding wall portion 16d is prevented from entering the engage elements 12 and further, the foam resin entering from the gap between the respective wall portions 16a is made to run round to a rear surface side of the respective wall portions 16a. By filling the foam resin between the wall portions 16a adjacent in a width direction of two rows of the wall portions 16a that are aligned in a longitudinal direction thereof, it is possible to secure a surface fastener to a molded body more solidly. FIG. 14 illustrates an example of a construction stated to the present invention that is composed of a continuous surrounding wall portion 16e in place of the surrounding wall portions 16d shown in FIG. 13. In this example, only one row of the surrounding wall portions 16e surrounding the group of the engaging elements 12 is disposed, however, it is also possible to disposed two or more rows of the engaging elements 12.

However, when only a positioning function due to the magnetic body is required in the present invention, the above-described molded resin entering preventing wall 16 made of the mere synthetic resin material is not always needed.

FIGS. 15 to 18 show an example of a forming die related to the present invention upon integrally molding the above-described fastener strip 10 on a foam molded article and its molding mechanism. As shown in FIGS. 15 to 18, the magnetic body 13 is magnetically sucked to a magnet 31 that is disposed on a forming die 30 to position and fix the fastener strip 10 on the forming die 30. When mounting the magnetic body 13 on the upper side of the magnet 31, depending on a strength of magnet poles at both ends of the magnetic body caused by the magnetic field of the magnet 31 and a magnetic flux density of the magnet 31. a force acts on the magnetic body 13. so that a force may act to allow the longitudinal both ends of the fastener strip 10 having this magnetic body 13 to correspond with the bipolar direction of the magnet 31. According to the present embodiment, it is important that the magnetic body 13 has a narrow configuration extending to a longitudinal direction of the substrate 11 of the fastener strip 10, and the magnetic body 13 is configured so as to allow the longitudinal both ends of the fastener strip 10 to correspond with the bipolar direction of the magnet 31.

As shown in FIG. 15, when mounting the fastener strip 10 within the forming die 30, due to the operation of the projecting portion 13a of the magnetic body 13 and the magnet 31 disposed on a lower die 30b of the forming die, as shown in FIG. 16, the fastener strip 10 is magnetically sucked as facing to the bipolar direction of the magnet 31 to be fixed on the lower die 30b of the forming die. In other words, if the magnet 31 set within the forming die is set in a desired direction required for mounting the fastener strip 10 in advance, only by mounting the fastener strip 10 on the magnet 31, it is possible to face this fastener strip 10 to a desired direction. As shown in FIG. 16, this magnetic suction makes it possible to closely contact the wall portion 16a to the lower die 30b of the forming die 30.

FIGS. 19 to 28 show a modification example of the projecting portion 13a as the magnetic body and a configuration of a periphery of the projecting portion.

FIG. 19 partially illustrates a configuration such that the base raw material portion 13c and the projecting portion 13a, which are made of a thermoplastic resin in which the magnetic particles 14 are mixed, are integrally fixed on the surface of the substrate 11. The base raw material portion 13c and the projecting portion 13a as the magnetic body 13 can be manufactured and fixed on the substrate 11 after molding the other constituent members of the fastener strip 10 separately. Alternately, the magnetic body 13 may be manufactured continuously by superimposing the other constituent members of the fastener strip 10 on the magnetic body 13 while manufacturing this magnetic body 13.

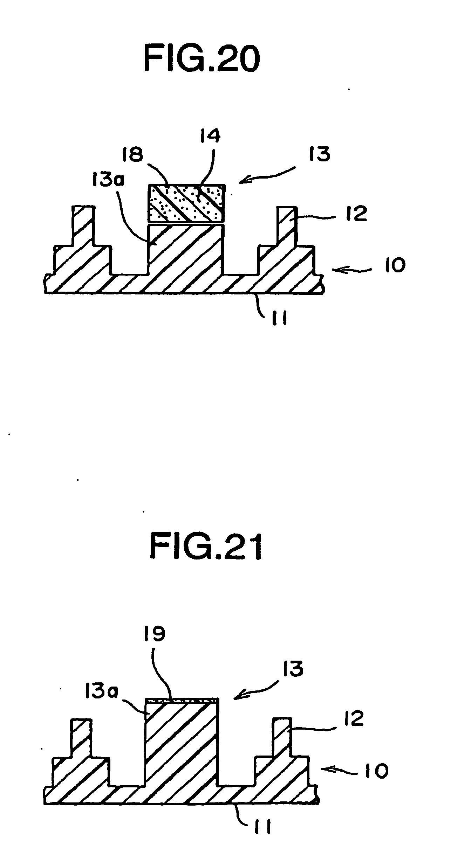

FIG. 20 partially illustrates a configuration such that a layer containing the magnetic particles 14 is laminated at a front end portion of the projecting portion 13a in the fastener strip 10 on which the projecting portion 13a is integrally molded. A thickness of a laminate layer 18 should be at a level whereby the magnetic body 13 according to the present invention can carry out its function.

FIG. 21 shows an example such that a film 19 containing the magnetic powders 14 is formed in place of the laminate layer 18 made of the synthetic resin material containing the magnetic powders 14 shown in FIG. 20. In FIGS. 20 and 21, the laminate layer 18 or the film 19 may be formed only at the front end portion of the projecting portion 13a. Alternatively, the laminate layer 18 or the film 19 may be formed across the entire surface of the projecting portion 13a. Further, the laminate layer 18 or the film 19 may be formed only on an upper surface along a longitudinal direction including peaks and bottoms of the magnetic body 13.

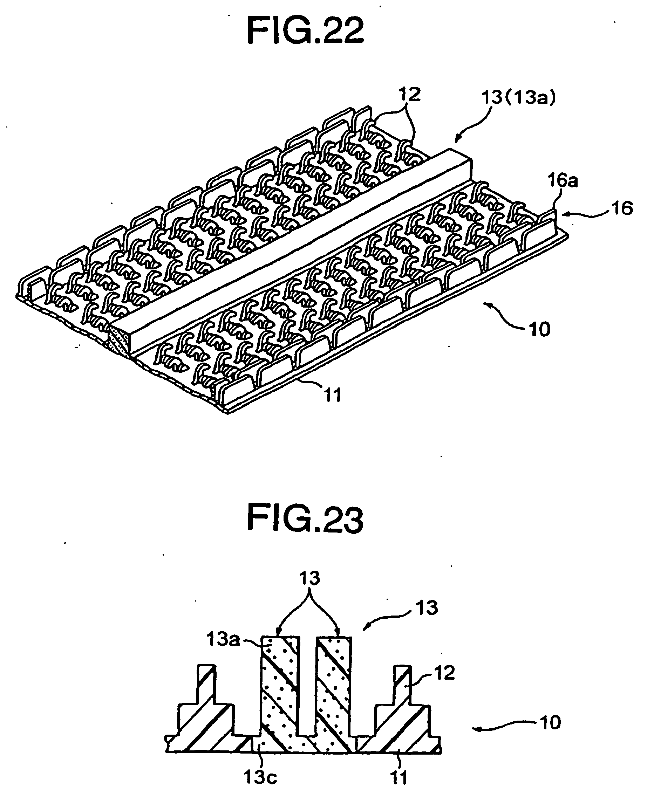

FIG. 22 shows an example of the continuous projecting portion 13a having no valley portion as the magnetic body 13. The magnetic body may be formed by using the thermoplastic resin material having the magnetic powders mixed therein, by forming the laminate layer as shown in FIGS. 20 and 21, and by forming the magnetic film.

FIG. 23 shows an example such that two rows of the projecting portions 13a as the magnetic body 13. In this case, two rows of the projecting portions 13a are connected each other at the raw material portion 13c on the bottom surface, however, without connecting two rows, they may be separately formed. In addition, as the magnetic resin to form the continuous projecting portion 13a, the thermoplastic plastic resin having the magnetic powders 14 mixed therein is used to mold the projecting portion 13 integrally, or the laminate layer containing the magnetic powders 14 may be formed, or the magnetic film may be formed. In this case, it is possible to appropriately adopt the above-described various methods for forming the magnetic body 13.

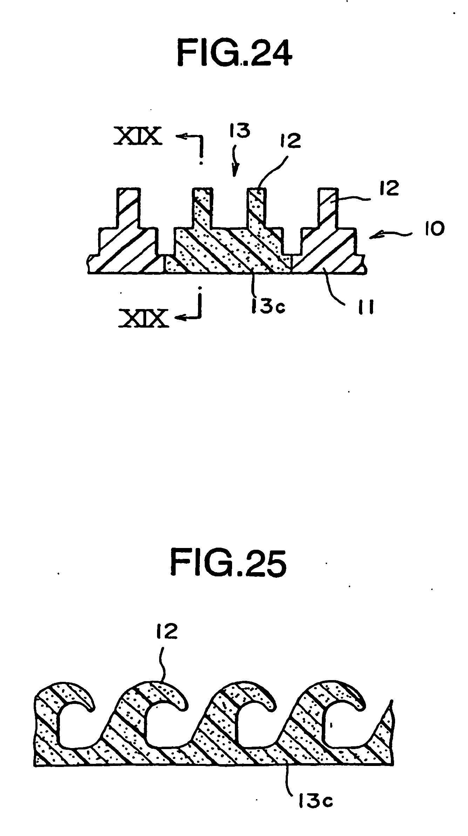

FIG. 24 shows an example such that a portion of the engage element 12 is formed by the magnetic material in place of the protecting portion 13a upon forming the magnetic body 13. In this case, as shown in FIG. 25. since the two rows of the engaging elements 12 formed by the magnetic material do not disperse the magnetic force, its base raw material portion 13c is connected thereto, so that they are entirely configured as one narrow magnetic body 13. In the meantime, the base raw material portion 13c of the engaging elements 12 is not necessarily connected thereto and this engaging element row may be two or more. The engaging element row having the magnetic powders 14 mixed therein has both a function of the magnetic body 13 and an original engagement function of the engaging element 12.

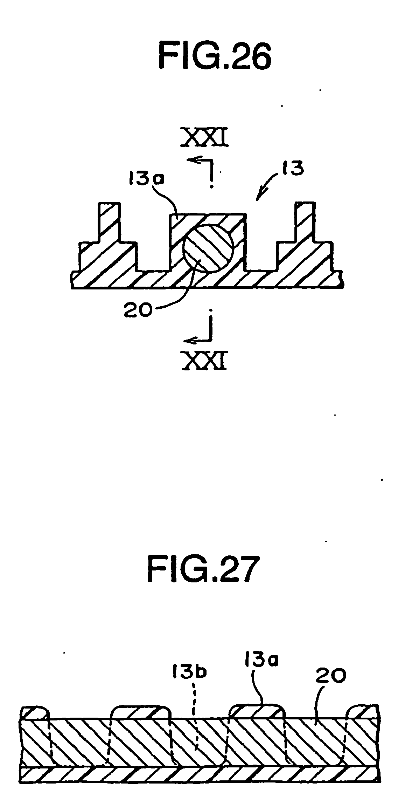

FIG. 26 shows an example of a construction related to the present invention such that the magnetic body 13 is composed of a metal wire material 20 as a long magnetic material that is disposed along the projecting portion 13a when the projecting portion 13a is composed of the continuous magnetic body 13. In this example, the metal wire material 20 with a circle cross section is disposed within the projecting portion 13a, however, in place of this, the metal wire material with a rectangular cross section or the other various cross section may be adopted. In addition, it is possible to mount the metal wire material 20 at the front end of the projecting portion 13a. In addition, as shown in FIG. 27, which is a construction related to the present invention, a configuration such that the metal wire material 20 is exposed from the valley portion 13b that is formed between the projecting portions 13a can be also adopted.

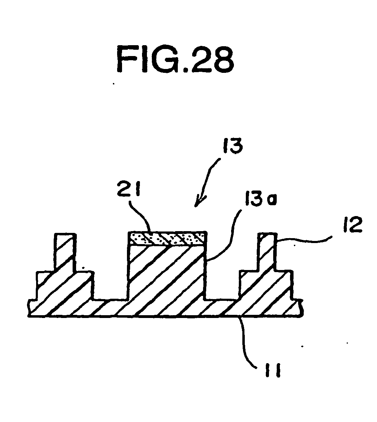

FIG. 28 shows an example of a construction related to the present Invention such that a long magnetic material is formed by a magnetic band material 21 disposed along an upper surface of the projecting portion 13a, for example, a magnetic metal wire material and a magnetic tape, or a woven and knitted fabric that is woven and composed from the synthetic resin fiber having a metal fiber and magnetise particles mixed therein or a nonwoven cloth made of these fibers. In addition, the magnetic band material 21 can be disposed inside the projecting portion 13a. The magnetic band material 21 may be adhered and secured on the upper surface of the projecting portion 13a, or upon molting the projecting portion 13a, the synthetic resin in the molten state enters a gap of the above-described fibers and runs round around the fibers to secure the magnetic band material 21. Further, in place of the magnetic band material 21, a magnetic string material made of the above-described fibers may be available.

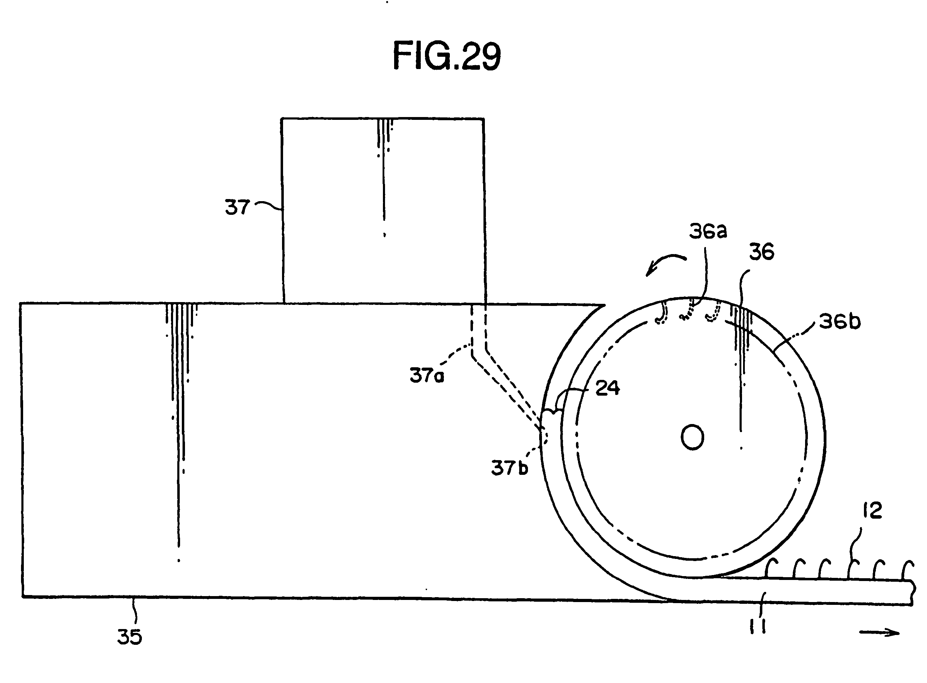

FIGS. 29 to 32 schematically illustrate a process related to the present invention for forming the fastener 10 and a device to be used in this process. In this case, it is stated that a basic process for manufacturing a resin-based fastener strip through a combination of an extruding machine and a die/hole for formation is publicly known in the art. Accordingly, not an entire process but a portion of the process relevant to the present invention will be only described.

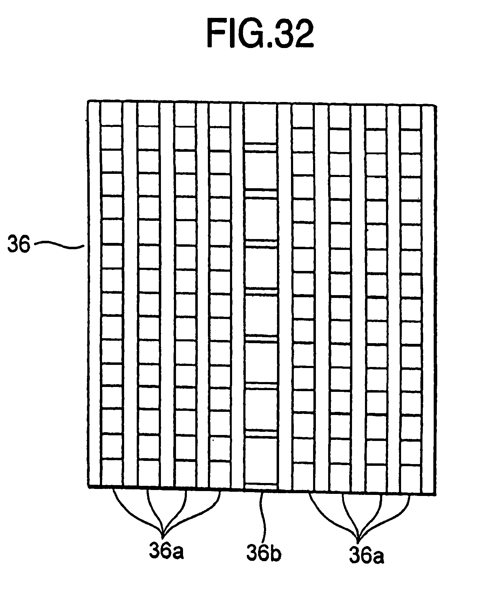

FIG. 29 is a side view of a fastener strip extruding process, and in the drawing, an extruding machine 35 is disposed in adjacent to a die wheel 36. The die wheel 36 is made in a cylindrical shape and it has cavities 36a for molding hook-shaped engaging elements and cavities 36b for molding a magnetic body. Both cavities are further disposed along an outer periphery of the die wheel 36 as shown in FIG. 32 in detail. The extruding machine 35 has a narrow configuration that is extended across a diameter of a cylinder of the die wheel 36 and it includes a series of first passages (not shown) through which a resin 24 flows. A replenishment particle retention portion 37 is located on an upper surface of the extruding machine 35. A replenishment particle passage portion 37a (shown by a hidden line) connects the replenishment particle retention portion 37 to a replenishment particle nozzle 37b located on an extruding surface of the extruding machine 35 in adjacent to the die wheel 36.

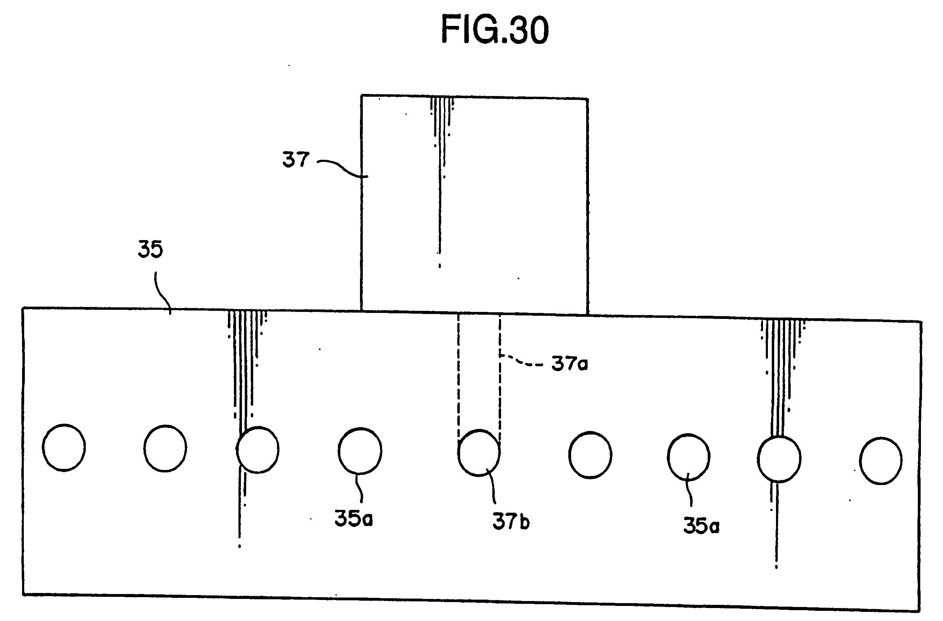

FIG. 30 is a front view of a die wheel facing surface of the extruding device 35. Many first nozzles 35a are extended across an extruding surface of the extruding machine 16 and the replenishment particle nozzle 37b is located substantially at a center of the extruding surface of the extruding machine 35. Further, FIGS. 29 and 30 show that the replenishment particle retention portion 37 is displaced at a rear position above the extruding machine 35 and the replenishment particle passage portion 37a is located at a center within the extruding machine 35.

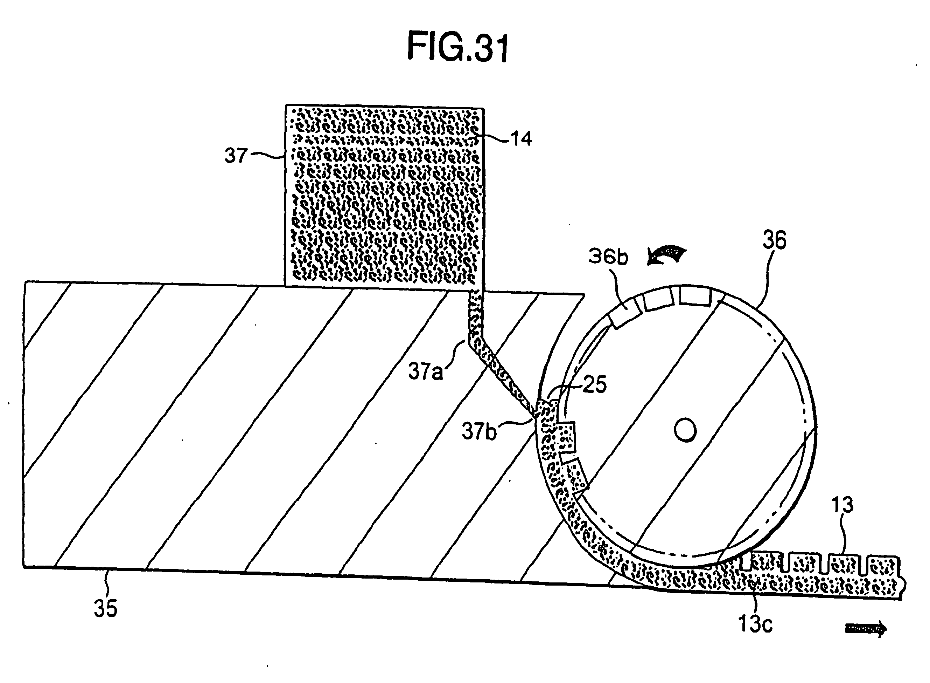

As shown in FIGS. 29 and 30, a molted resin material 24 is extruded through the first passage of the extruding machine 35 and consequently, the first nozzle 35a. In these drawings, the die wheel 36 rotates in the anticlockwise direction, the molted resin material 24 is extruded through the first nozzle 35a, and the die wheel 36 continuously molds the fastener strip 10 having the engaging element 12 composed of the substrate 11 and a hook element in cooperation with the lower both surfaces of the extruding machine 35. At the same time, as shown in a cross sectional view of FIG. 31, a flow of a magnetic resin material 25 capable of being magnetically sucked and containing the magnetic powders 14 is extruded from the replenishment particle retention portion 37 through the replenishment particle passage portion 37a and the replenishment particle nozzle 37b. The magnetic resin material 25 capable of being magnetically sucked is extruded from the replenishment particle retention portion 37 to form a discontinuous portion of the substrate 11, and the replenishment particle nozzle 37b is positioned with the magnetic body molding cavity 36b so that the projecting portion 13 is formed on the substrate 11 by the magnetic body molding cavity 36b. The magnetic resin material 25 capable of being magnetically sucked is extruded to become an integral part of the fastener strop 10, however, it is found that the magnetic powders 14 retain in the discontinuous area and they are not dispersed over the entire substrate 11. Thereby, the fastener strip 10 having an area capable of being magnetically sucked as a discontinuous object is formed continuously to be pulled out from a peripheral portion of the bottom of the die wheel 36.

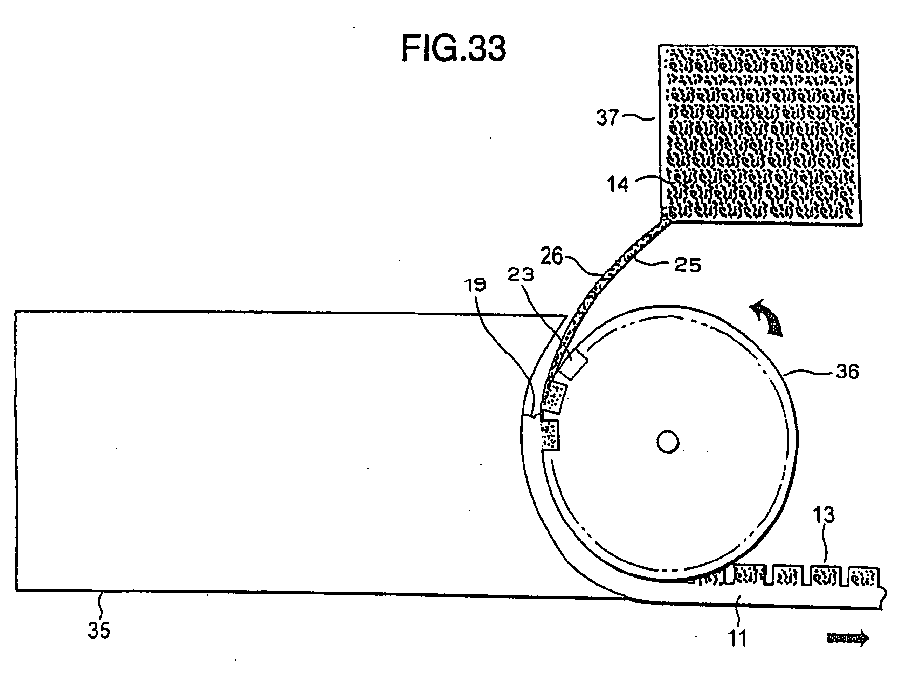

FIG. 33 is a side cross sectional view showing an outline of a process related to the present invention such that the magnetic powders 14 do not pass through the extruding machine 35 unlike the main embodiment but they are directly introduced in the block molding cavity 23. According to this process, the replenishment particle retention portion 37 is located at an appropriate position, and a flow of the resin 25 capable of being magnetically sucked is carried to the die wheel 36 through a line 26 in an area of the magnetic body molding cavity 36b.

The resin 25 capable of being magnetically sucked is extruded to become an integral part of the fastener strip 10, however, the magnetic powders 14 remain in the discontinuous area and they are not dispersed over the entire substrate 11. The other procedures of the process are identical with those of the above described process.

FIG. 34 is a cut end surface view showing an example of the fastener strip 10 that is manufactured by the process shown in FIG. 33. In this example, the magnetic particles 14 are only located in the center projecting portion 13a but they are not located in the substrate below a center block. However, by changing a flow rate ratio of the resin 25 capable of being magnetically sucked in a relation with a flow rate ratio of the resin 24, a rotation velocity of the die wheel 21, and a degree of approximation of an outlet port of the line 26 to the magnetic body molding cavity 36b, it is possible to control a width of the substrate 11 and a member to be carried together with the substrate 11. Thus, FIG. 34 shows an example such that the magnetic powders are located only in the center projecting portion 13a but they are not located in the lower substrate 11. However, also in the example of the process shown in FIG. 33, it is sure that it is possible to manufacture the fastener strip as shown in FIG 2, in which the magnetic powders 14 are located in both the upper and lower substrates of the center projecting portion 13a.

According to the above descriptions, it is appreciated that, a very effective method to put the magnetic powders particularly in a target area of the fastener strip has been described. The above descriptions may include many specific properties, however, these specific properties should not be interpreted as a limitation to a scope of the invention but they should be interpreted as an example.

Other modifications are possible.

Some examples among the possible modifications are as follows.

The replenishment particle retention portion is not necessarily located at a rear position above the extruding machine, but the replenishment particle retention portion may be located at another appropriate place, or the line or a tube to be used for carrying the magnetic powders to the replenishment particle passage.

The resin containing the magnetic particles or such particles is extruded from the retention portion to the nozzle or the line outlet port through the passage or the line. Such a technique is publicly known in the art, and it includes a delivery by air or a fluid pressure, gravity or other means.

The flow of the magnetic powders can run through a dedicated passage within the extruding machine or the flow of the magnetic powders can be coupled to another passage at an upstream of the nozzle within the extruding machine.

The magnetic body is formed together with the substrate, or they can be put in the discontinuous area of the substrate to be formed separately.

The magnetic powders can contain all ferromagnets including iron oxide of various configurations, iron stearate, various organic iron compounds, rare earth metal and rare earth metal compounds or other substances capable of being magnetically sucked in addition the above-described magnet bodies but not limited thereto.

Further, the magnetic powder can have a magnetic suction ability in itself. In other words, the magnetic powder itself becomes a magnet. Thereby, the fastener strip can be secured to a metal or another substance capable of being sucked that is not a magnet in itself.

The magnetic powders can be mixed in the resin in advance or the magnetic powders may be "loose" particles to be carried down in the resin flow.

The configuration of the discontinuous magnetic body capable of being magnetically sucked may be different from the illustrated projecting portion, engaging element, and wall portion. As an example, a rectangular cube may be also used. It is a matter of course that the magnetic powders further can be only in the discontinuous area of the substrate. In this case, the discontinuous area of the substrate may be substantially flat having no member disposed thereon, or it may have a member disposed thereon.

The engaging element disposed on the substrate may be different from a hook element fastener shown in the drawing. As an example, it may be a loop engaging element. As a matter of fact, the other type of engaging element (not merely a hook element or a loop) can be also used.

The magnetic body can be injected not only in a center position shown in the main embodiment or a lateral position shown in FIG. 3 but also in the discontinuous area at arbitrary positions of the fastener strip. For example, by positioning the replenishment particle nozzle on the surface of the extruding machine in adjacent to the cavity for forming a hook element, a hook element capable of being magnetically sucked can be formed on the substrate of the fastener strip. By positioning the outlet port of the line in the vicinity of the cavity for forming a hook element, it is possible to obtain the same result as in the embodiment of the other process.

Unlike FIGS. 31 to 33, and 35, the fastener strip does not have one replenishment particle nozzle or one line outlet port but the replenishment particles nozzles can be disposed at plural places on the surface of the extruding machine, or the line outlet ports can be disposed at plural places in the vicinity of the die wheel. As a matter of facet, such plural arrangements result in the fastener strip shown in FIG. 3

The magnetic powders are not introduced through the replenishment particle nozzle as the main embodiment shown in FIG. 31 or they are not directly introduced in the block molding cavity but they can be introduce in a flow of the resin in the discontinuous area right above the resin after being extruded from the first nozzle.

Some other constructions related to the present invention on the basis of the above-described various modifications will be described below with reference to the drawings, and particularly, a method for manufacturing the fastener strip will be described further specifically together with the description of the device for manufacturing the fastener strip.

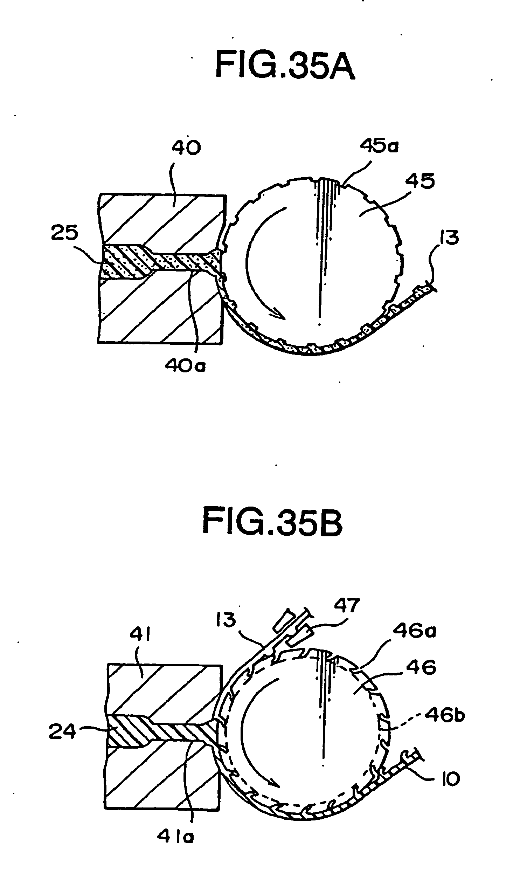

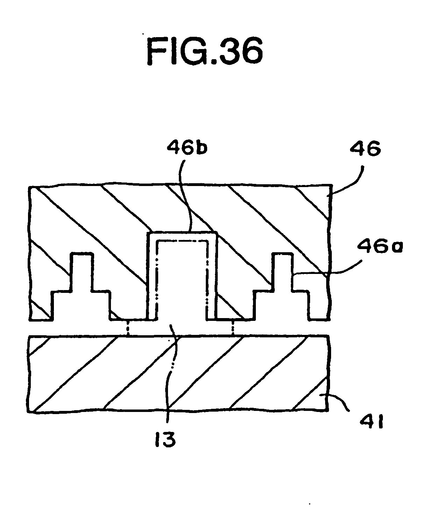

FIGS. 35(A), 35(B), and 36 illustrate a device for manufacturing a fastener strip and a method for manufacturing the same according to another construction related to the present invention.

PIG. 35 shows that the fastener strip is manufactured in two steps. As shown in FIG. 35(A), a first die wheel 45 is disposed facing to an extruding port 40a of a first extruding die 40. The first die wheel 45 rotates around a rotational axis in a vertical direction to the paper in FIG. 35(A). On a peripheral surface of rotation of the first die wheel 45, a magnetic body molding cavity is formed. As the magnetic body molding cavity, in FIG 35(A), concave portions 45a for projecting portions having narrow configurations are formed, which are intermittently disposed in a peripheral direction.

A clearance is formed between the first extruding die 40 and the first die wheel 45, and in this clearance, the base raw material portion 13c of the magnetic body 13 is molded as shown in FIG. 6. In the meantime, the concave portions 45a for projecting portions can be continuously formed in a peripheral direction of the first die wheel 45.

In FIG 35(B), a second die wheel 46 is disposed facing to an extruding port 41a of a second extruding die 41. The second die wheel 46 rotates around a rotational axis in a vertical direction to the paper in FIG.35 (B). On a peripheral surface of rotation of the second die wheel 46, a fastener strip molding cavity is formed. As the fastener strip molding cavity, as shown in FIG 36, concave portions for engaging elements and concave portions for molding a substrate, which are disposed at predetermined intervals in a peripheral direction, a fastener strip molding cavity 46a, a concave portion 46b for accommodating a magnetic molded article, a concave portion for a member composing the fastener strip including the other parts, and a concave portion such as the above-described wall for preventing entering of a molded material, the wall portion and the like (not shown) are formed according to need.

In FIG. 35(A), the synthetic resin 25 displaced in the first extruding die 40 in the molten state having the magnetic powders mixed therein is extruded from the extruding port 40a, and this synthetic resin 24 is continuously filled in the fastener strip molding cavity 46a of the first die wheel 45 rotating around a horizontal axis. The magnetic body 13 (the molded article) having the projecting portion 13a and the base raw material portion 13c is peeled off from the first die wheel 45.

In FIG. 35(B), the synthetic resin 24 displaced in the second extruding die 41 in the molten state having the magnetic powders mixed therein is extruded from the extruding port 41a, and this synthetic resin 24 is continuously filled in the fastener strip molding cavity of the second die wheel 46 rotating around a horizontal axis. The magnetic body molded article 13 that is molded in the above through a magnetic material guide portion 47 is continuously supplied to the concave portion 46b for accommodating a magnetic molded article in the fastener strip molding cavity. From the second die wheel 46, the fastener strip molded article including the substrate 11, the engaging element 12, and the projecting portion 13a is peeled off so as to manufacture the fastener strip 10. The manufactured fastener strip 10 can be used as cut in a desired length.

In the example shown in FIG. 36, the cross sectional figuration of the concave portion 46b for accommodating a magnetic molded article formed in the above-described second die wheel 46 is made larger than the cross sectional figuration of the above-described magnetic body 13 molded separately, particularly, the cross sectional figuration of its projecting portion 13a. Thereby, at least a surface of the projecting portion 13a is covered with the resin for molding 24 of the fastener strip 10. As a result, even when the resin used for the magnetic body 13 and the resin used for the fastener strip 10 lack in affinity, separation between the projecting portion 13 and the main body of the fastener strip 10 can be evaded.

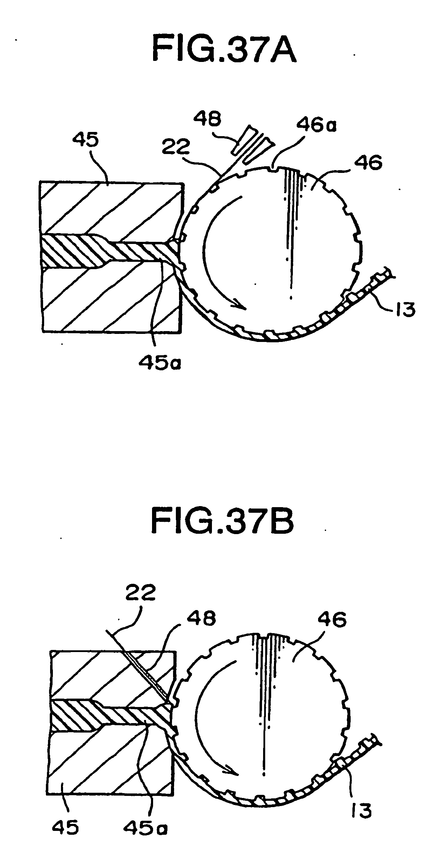

In the example shown in FIG. 35, the synthetic resin 25 in the molten state having the magnetic powders mixed therein is extruded from the extruding port 40a of the first extruding die 40. However, as shown in FIGS. 37(A) and 37(B), the fastener strip 10 also can be manufactured by extruding the synthetic resin having no magnetic poser mixed therein from the extruding port 40a, supplying a long magnetic material 22 separately prepared through a magnetic body guide portion 48 to mold the magnetic body molded article 13 as the magnetic body, and supplying this magnetic body molded article 13 through a magnetic body guide portion 47 disposed at the upstream side of a rotational direction of the second die wheel 46 shown in FIG. 35(B).

FIG. 37(A) illustrates a configuration such that the magnetic body guide portion 48 is provided at the outside of the extruding die 40, and FIG. 37(B) illustrates an example such that the magnetic body guide portion 48 is formed within the extruding die 40. The other constitutional members are identical with those in FIG. 37(A).

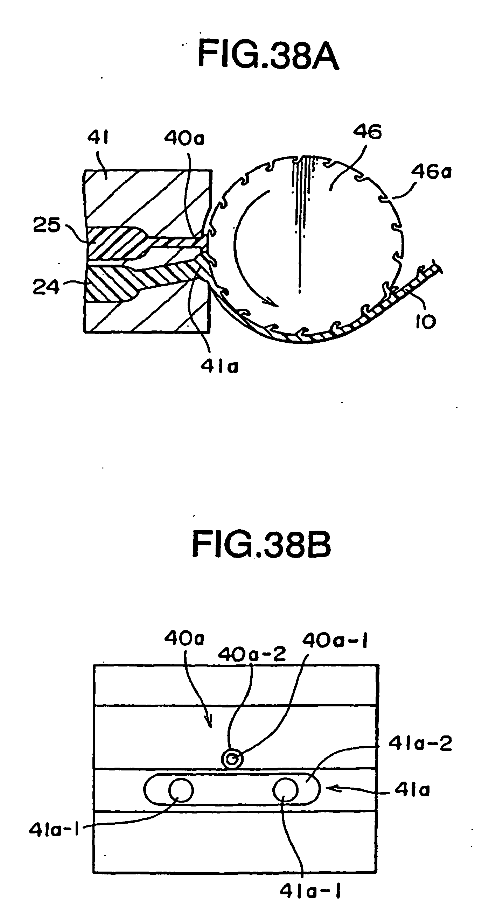

In an example shown in FIG. 38, differently from the cases shown in FIGS. 35 to 37, the fastener strip 10 is manufactured in one step. Accordingly, in this embodiment, the above-mentioned extruding die 41 is used independently to manufacture the fastener strip 10 with a magnetic body. In the illustrated example, since a relation with the die wheel 46 is identical with the case of FIG. 35 other than that the extruding ports 40a and 41a are disposed at the upper and lower positions of the extruding die 41, its explanation is herein omitted and the same reference numerals are given to the same components. Two extruding ports 40a and 41a disposed at the extruding die 41 can extrude the different synthetic resin members, respectively. As shown in FIG. 38(B), at a front end of the extruding port 40a, a nozzle portion 40a-1 and a concave portion 40a-2 are formed. This concave portion 40a-2 is formed so as to intensively mix the magnetic body from the extruding port 40a into the narrow concave portion for the projecting portion, which is formed for forming the magnetic body and is continuously or intermittently disposed in a peripheral direction, and fill the synthetic resin in the molten state therein. This results in locally filling the synthetic resin extruded from the nozzle portion 40a-1 in the concave portion for the projecting portion and this makes it possible to prevent the synthetic resin from being filled in the concave portion for the engaging element that is located beside the concave portion for the projecting portion.

The extruding ports 41a at a lower position is formed to be adjusted to respective concave portions corresponding to the fastener strip molding cavity 46a that is formed in the die wheel 46, for example, the cavity for the projecting portion, the cavity for the engaging element and the like. A nozzle portion 41a-1 and a concave portion 41a-2 around the nozzle portion 41a-1 are formed at a front end of the extruding port 41a. The synthetic resin 24 extruded from the nozzle portion 41a-1 may spread over the concave portion 41a-2 and the synthetic resin 24 can be filled from the entire surface of the fastener strip molding cavity 46b.

The magnetic resin material 25 in the molten state having the magnetic powders mixed therein is extruded from the extruding outlet port 40a to be continuously filled in the magnetic body molding cavity. Thereby, the magnetic body is manufactured. At the same time, the synthetic resin material 24 in the molten state is extruded from the extruding port 41a to be continuously filled within the fastener strip molding cavity 46a. By filling the synthetic resin material 24 from the extruding ports 41a, as shown in FIG. 19, the magnetic body 13 made of the magnetic resin material 25 from the extruding outlet port 40a is superimposed on the substrate 11 so that the magnetic body 13 can be integrated with the substrate 11. In addition, as shown in FIGS. 6 and 23, the synthetic resin material 24 can be filled in such a manner that the magnetic body 13 and the substrate are connected in a strip width direction.

After filing the synthetic resin material 24, if the fastener strip molded article is peeled off from the die wheel, a continuous fastener strip can be obtained. This continuous fastener strip can be used as cut into a desired length.

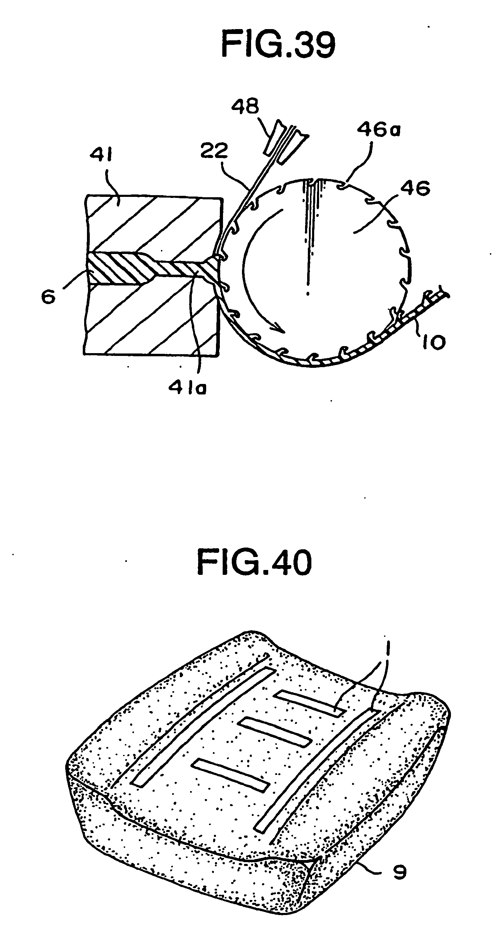

As shown in FIG. 39, the synthetic resin 24 having no magnetic powder mixed therein is extruded from the extruding port 40a to be filled in the fastener strip molding cavity 46a and the magnetic body molding cavity 46b (in this case, the concave portion for molding the magnetic body and the concave portion for molding the fastener strip). In addition, by supplying the long magnetic material 22 from the magnetic material guide portion 48, the magnetic body provided with the long magnetic material 22 is formed in the projecting portion 13a. Thereafter, the fastener strip molded article is peeled off from the die wheel to manufacture the fastener strip 10.

In addition, in the example shown in FIG. 39, without the magnetic body guide portion 48, the fastener strip 10 is molded and by laminating or coating the magnetic material at least on the upper surface of the projecting portion 13a in the molded fastener strip molded article, the magnetic body can be also formed.

In addition, as a configuration of the molding cavity, by using the concave portions for the projecting portions formed along a rotational axial direction of the die wheel at equal intervals in a peripheral direction of the peripheral surface of the die wheel, the fastener strip can be manufactured. In this time, it is necessary that the continuously molded fastener strip is cut between the adjacent projecting portions and the fastener strip element is created. After cutting the fastener strip or before cutting the fastener strip, the above-described magnetic member can be applied at least on the upper surface of the projecting portion.

The examples shown in FIGS. 35 to 39 are typical constructions related to the invention and any device may be adopted if they are within a scope of the present invention. Accordingly, the scope of the present invention should be decided not by the illustrated embodiments but by attached claims.

## Claims

1. A fastener strip (10) capable of being magnetically fixed on an object, comprising:
(a) a substrate (11);
(b) at least one engaging element (12) to be supported on the substrate (11); and
(c) a magnetic body (13) put into a discontinuous area of the substrate (11) or into a discontinuous area of at least one integrated member to be supported on the substrate (11), being **characterised in that**
at least two rows of entering preventing wells (16) for preventing a foam resin from entering the area on which the engaging element (12) is supported from the outside are disposed at both lateral side edges of the substrate (11);
the preventing wall for each row of the entering preventing walls (16) is composed of a plurality of preventing wall portions (16a, 16b, 16o. 16d, 16e) that are disposed in a row at predetermined intervals, and the preventing wall portions (16a, 16b, 16c, 16d, 16e) of the adjacent entering preventing walls (16 are disposed in a staggered shape with respect to each other.

2. The fastener strip according to claim 1, being **characterized in that** the magnetic body (13) has a narrow configuration that Is extended in a longitudinal direction of the substrate (t1) and depending on a magnet (31) disposed at a predetermined position of the object, the magnetic body (13) has a sufficient magnetism for allowing the longitudinal ends of the fastener strip (10) to correspond with a bipolar direction of the magnet (31).

3. The fastener strip according to claim 1 or 2, being **characterized in that** the magnetic body (13) is disposed in the discontinuous area of the substrate (11) along its longitudinal direction.

4. The fastener strip according to claim 2, being **characterized in that** the magnetic body (13) is disposed substantially in a lateral canter of the discontinuous area of the substrate (11) along a longitudinal direction thereof, the magnetic body (13) comprising a single strip of projecting portions (13a).

5. The fastener strip according to claim 4, being **characterized in that** valley portions (13b) are formed at equal intervals along the longitudinal direction of the substrate (11) between the projecting portions (13a).

6. The fastener strip according to claim 1 or 4, being **characterized in that** the magnetic body (13) is made of a synthetic resin material containing magnetic materials.

7. The fastener strip according to claim 1 or 4, being **characterized in that** the magnetic body (13) is included in the substrate (11).

8. The fastener strip according to claim 6, being **characterized in that** the magnetic material comprises magnetic powders (14).

9. The fastener strip according to claim 6, being **characterized in that** the magnetic material comprises a long magnetic material (20, 21).

10. The fastener strip according to claim 9, being **characterized in that** a valley portion (13b) is formed in the projecting portion (13a), the long magnetic material (20) is embedded In the projecting portion (13a), and the long magnetic material (20) is exposed at the valley portion (13b).

11. The fastener strip according to claim 9, being **characterized in that** the long magnetic material (21) is fixed on an upper surface of the projecting portion (13a).

12. The fastener strip according to claim 4, being **characterized in that** the projecting portion (13a) comprises a plurality of engaging elements (12), which contain the magnetic material and of which substrates (11) are connected to one another.

13. The fastener strip according to claim 6, being **characterized in that** the projecting portion (13a) includes a thermoplastic resin to be integrally molded on the substrate (11).

14. The fastener strip according to claim 1, being **characterized in that** the engaging element (12) has many engaging element areas that are disposed on one surface of the substrate and the engaging element areas are defined in a longitudinal direction through partition walls (16).

15. The fastener strip according to claim 1, being **characterized in that** the partition walls (16) are disposed at intervals along its longitudinal direction.

16. The fastener strip according to claim 14, being **characterized in that** each engaging element area defined by the partition wall (16) comprises a surrounding wall portion (16d, 18e) surrounding the engaging element area including the partition wall (18).

17. The fastener strip according to any preceding claim, being **characterized in that** the magnetic body (13) includes at least one row of entering preventing walls (16).

## Patentansprüche

1. Befestigungsstreifen (10), der dazu in der Lage ist, magnetisch an einem Gegenstand befestigt zu werden, wobei der Streifen Folgendes umfasst:
(a) ein Substrat (11),
(b) wenigstens ein Eingriffselement (12), das auf dem Substrat (11) getragen werden soll, und
(c) einen magnetischen Körper (13), der in eine unterbrochene Fläche des Substrats (11) oder in eine unterbrochene Fläche wenigstens eines integrierten Elements, das auf dem Substrat (11) getragen werden soll, eingebracht ist, **dadurch gekennzeichnet, dass**:
wenigstens zwei Reihen von Eintrittsverhinderungswänden (16), um zu verhindern, dass ein Schaumharz von außen in die Fläche eintritt, auf der das Eingriffselement (12) getragen wird, auf beiden seitlichen Seitenkanten des Substrats (11) angeordnet sind,
die Verhinderungswand für jede Reihe der Eintrittsverhinderungswände (16) aus mehrere Verhinderungswandabschnitten (16a, 16b, 16c, 16d, 16e) besteht, die in einer Reihe in vorbestimmten Abständen angeordnet sind, und die Verhinderungswandabschnitte (16a, 16b, 16c, 16d, 16e) der benachbarten Eintrittsverhinderungswände (16) in einer versetzten Form in Bezug aufeinander angeordnet sind.

2. Befestigungsstreifen nach Anspruch 1, **dadurch gekennzeichnet, dass** der magnetische Körper (13) eine schmale Konfiguration hat, die sich in einer Längsrichtung des Substrats (11) erstreckt, und von einem Magneten (31) abhängt, der an einer vorbestimmten Position des Gegenstandes angeordnet ist, wobei der magnetische Körper (13) einen ausreichenden Magnetismus hat, um zu ermöglichten, dass die Längsenden des Befestigmgsstreifens (10) mit einer zweipoligen Richtung des Magneten (31) übereinstimmen.

3. Befestigungsstreifen nach Anspruch 1 oder 2, **dadurch gekennzeichnet, dass** der magnetische Körper (13) in der unterbrochenen Fläche des Substrats (11) längs dessen Längsrichtung angeordnet ist.

4. Befestigungsstreifen nach Anspruch 2, **dadurch gekennzeichnet, dass** der magnetische Körper (13) im Wesentlichen in einer seitlichen Mitte der unterbrochenen Fläche des Substrats (11) längs einer Längsrichtung desselben angeordnet ist, wobei der magnetische Körper (13) einen einzigen Streifen von vorspringenden Abschnitten (13a) umfasst.

5. Befestigungsstreifen nach Anspruch 4, **dadurch gekennzeichnet, dass** Talabschnitte (13b) in gleichen Abständen längs der Längsrichtung des Substrats (11) zwischen den vorspringenden Abschnitten (13a) geformt sind.

6. Befestigungsstreifen nach Anspruch 1 oder 4, **dadurch gekennzeichnet, dass** der magnetische Körper (13) aus einem Kunstharz-Werkstoff, der magnetische Werkstoffe enthält, hergestellt ist.

7. Befestigungsstreifen nach Anspruch 1 oder 4, **dadurch gekennzeichnet, dass** der magnetische Körper (13) in dem Substrat (11) eingeschlossen ist.

8. Befestigungsstreifen nach Anspruch 6, **dadurch gekennzeichnet, dass** der magnetische Werkstoff magnetische Pulver (14) umfasst.

9. Befestigungsstreifen nach Anspruch 6, **dadurch gekennzeichnet, dass** der magnetische Werkstoff einen langen magnetischen Werkstoff (20, 21) umfasst.

10. Befestigungsstreifen nach Anspruch 9, **dadurch gekennzeichnet, dass** ein Talabschnitt (13b) in dem vorspringenden Abschnitt (13a) geformt ist, der lange magnetische Werkstoff (20) in dem vorspringenden Abschnitt (13a) eingebettet ist und der lange magnetische Wertstoff (20) an dem Talabschnitt (13b) freigelegt ist.

11. Befestigungsstreifen nach Anspruch 9, **dadurch gekennzeichnet, dass** der lange magnetische Werkstoff (21) auf einer oberen Fläche des vorspringenden Abschnitts (13a) befestigt ist.

12. Befestigungsstreifen nach Anspruch 4, **dadurch gekennzeichnet, dass** der vorspringende Abschnitt (13a) mehrere Eingriffselemente (12) umfasst, die den magnetischen Werkstoff enthalten und deren Substrate (11) miteinander verbunden sind.

13. Befestigungsstreifen nach Anspruch 6, **dadurch gekennzeichnet, dass** der vorspringende Abschnitt (13a) ein thermoplastisches Harz umfasst, um integral auf dem Substrat (11) geformt zu sein.

14. Befestigungsstreifen nach Anspruch 1, **dadurch gekennzeichnet, dass** das Eingriffselement (12) viele Eingriffselementflächen hat, die auf einer Oberfläche des Substrats angeordnet sind, und die Eingriffselementflächen in einer Längsrichtung durch Trennwände (16) definiert werden.

15. Befestigungsstreifen nach Anspruch 1, **dadurch gekennzeichnet, dass** die Trennwände (16) in Abständen längs dessen Längsrichtung angeordnet sind.

16. Befestigungsstreifen nach Anspruch 14, **dadurch gekennzeichnet, dass** jede durch die Trennwand (16) definierte Eingriffselementfläche einen umschließenden Wandabschnitt (16d, 16e) umfasst, der die Eingriffselementfläche einschließlich der Trennwand (16) umschließt.

17. Befestigungsstreifen nach einem der vorhergehenden Ansprüche, **dadurch gekennzeichnet, dass** der magnetische Körper (13) wenigstens eine Reihe von Eintrittsverhinderungswänden (16) einschließt.

## Revendications

1. Bande de fixation (10), pouvant être fixée magnétiquement sur un objet, comprenant:
(a) un substrat (11) ;
(b) au moins un élément d'engagement (12), destiné à être supporté sur le substrat (11) ; et
(c) un corps magnétique (13) agencé dans une zone discontinue du substrat (11) ou dans une zone discontinue d'au moins un élément intégré, destiné à être supporté sur le substrat (11), **caractérisée en ce que** :
au moins deux rangées de parois empêchant une entrée (16), pour empêcher l'entrée d'une mousse de résine dans la zone sur laquelle l'élément d'engagement (12) est supporté à partir de l'extérieur, sont agencées au niveau des deux bords latéraux du substrat (11) ;
la paroi d'empêchement, pour chaque rangée de parois empêchant une entrée (16), est composée de plusieurs parties de paroi d'empêchement (16a, 16b, 16c, 16d, 16e), agencées dans une rangée à des intervalles prédéterminés, les parties de paroi d'empêchement (16a, 16b, 16c, 16d, 16e) des parois adjacentes empêchant une entrée (16) étant agencées dans une forme mutuellement décalée.

2. Bande de fixation selon la revendication 1, **caractérisée en ce que** le corps magnétique (13) a une configuration étroite étendue dans une direction longitudinale du substrat (11), avec une suspension sur un aimant (31) agencé au niveau d'une position prédéterminée de l'objet, le corps magnétique (13) présentant un magnétisme suffisant pour permettre aux extrémités longitudinales de la bande de fixation (10) de correspondre à une direction bipolaire de l'aimant (31).

3. Bande de fixation selon les revendications 1 ou 2, **caractérisée en ce que** le corps magnétique (13) est agencé dans la zone discontinue du substrat (11), le long de sa direction longitudinale.

4. Bande de fixation selon la revendication 2, **caractérisée en ce que** le corps magnétique (13) est agencé pratiquement dans un centre latéral de la zone discontinue du substrat (11), le long d'une direction longitudinale de celle-ci, le corps magnétique (13) comprenant une seule bande de parties en saillie (13a).

5. Bande de fixation selon la revendication 4, **caractérisée en ce que** des parties de creux (13b) sont formées à des intervalles égaux le long de la direction longitudinale du substrat (11), entre les parties en saillie (13a).

6. Bande de fixation selon les revendications 1 ou 4, **caractérisée en ce que** le corps magnétique (13) est composé d'un matériau de résine synthétique contenant des matériaux magnétiques.

7. Bande de fixation selon les revendications 1 ou 4, **caractérisée en ce que** le corps magnétique (13) est inclus dans le substrat (11).

8. Bande de fixation selon la revendication 6, **caractérisée en ce que** le matériau magnétique comprend des poudres magnétiques (14).

9. Bande de fixation selon la revendication 6, **caractérisée en ce que** le matériau magnétique comprend une matériau magnétique long (20, 21).

10. Bande de fixation selon la revendication 9, **caractérisé en ce qu'**une partie de creux (13b) est formée dans la partie en saillie (13a), le matériau magnétique long (20) étant noyé dans la partie en saillie (13a), et le matériau magnétique long (20) étant exposé au niveau de la partie de creux (13b).

11. Bande de fixation selon la revendication 9, **caractérisée en ce que** le matériau magnétique long (21) est fixé sur une surface supérieure de la partie en saillie (13a).

12. Bande de fixation selon la revendication 4, **caractérisée en ce que** la partie en saillie (13a) englobe plusieurs éléments d'engagement (12) contenant le matériau magnétique et dont les substrats (11) sont connectés les uns aux autres.

13. Bande de fixation selon la revendication 6, **caractérisée en ce que** la partie en saillie (13a) englobe une résine thermoplastique, destinée à être moulée d'une seule pièce sur le substrat (11).

14. Bande de fixation selon la revendication 1, **caractérisée en ce que** l'élément d'engagement (12) comporte de nombreuses zones de l'élément d'engagement, agencées sur une surface du substrat, les zones de l'élément d'engagement étant définies dans une direction longitudinale par des parois de séparation (16).

15. Bande de fixation selon la revendication 1, **caractérisée en ce que** les parois de séparation (16) sont agencées à des intervalles le long de sa direction longitudinale.

16. Bande de fixation selon la revendication 14, **caractérisée en ce que** chaque zone de l'élément d'engagement définie par la paroi de séparation (16) comprend une partie de paroi environnante (16d, 16e), entourant la zone de l'élément d'engagement englobant la paroi de séparation (16).

17. Bande de fixation selon l'une quelconque des revendications précédentes, **caractérisée en ce que** le corps magnétique (13) englobe au moins une rangée de parois empêchant une entrée (16).
